# EUROPÄISCHE PATENTSCHRIFT

(11) **EP 4 232 399 B1**
(45) Veröffentlichungstag und Bekanntmachung des Hinweises auf die Patenterteilung: **04.12.2024**
(21) Anmeldenummer: 21815111.6
(22) Anmeldetag: 21.10.2021
(51) Int. Cl.: B67D 1/00, A47J 31/40, B67D 1/04, B67D 7/02, B65D 85/804

(54) **KARTUSCHENSYSTEM; GETRÄNKEZUBEREITUNGSMASCHINE UND VERFAHREN ZUR HERSTELLUNG EINES KARTUSCHENSYSTEMS**
CARTRIDGE SYSTEM, BEVERAGE PREPARATION MACHINE, AND PROCESS FOR MANUFACTURING A CARTRIDGE SYSTEM
SYSTÈME DE CARTOUCHE, MACHINE DE PRÉPARATION DE BOISSONS ET PROCÉDÉ DE PRODUCTION D'UN SYSTÈME DE CARTOUCHE

(30) Priorität: 22.10.2020 DE 102020213332; 22.10.2020 DE 102020213333; 04.12.2020 DE 102020215361; 04.12.2020 DE 102020215357; 11.03.2021 DE 102021202394; 11.03.2021 DE 102021202395; 11.03.2021 DE 102021202396
(43) Veröffentlichungstag der Anmeldung: 30.08.2023
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner
(86) Internationale Anmeldenummer: PCT/EP2021/079271
(87) Internationale Veröffentlichungsnummer: WO 2022/084476

(56) Entgegenhaltungen:
- EP-A1- 2 017 221
- WO-A2-03/047657
- WO-A2-2015/082917
- GB-A- 2 575 304
- US-A- 4 306 667

## Beschreibung

### Stand der Technik

Die vorliegende Erfindung geht aus von einem Kartuschensystem zur Herstellung eines Getränks, wobei das Kartuschensystem in eine Getränkezubereitungsmaschine einsetzbar ist, wobei das Kartuschensystem eine Kartusche, die ein mit einer Getränkesubstanz gefülltes Reservoir umfasst, und eine Kartuschenaufnahme umfasst, wobei die Kartuschenaufnahme eine mit dem Reservoir in Fluidverbindung bringbare Mischkammer und eine in die Mischkammer mündende Fluidzuführung aufweist.

Solche Systeme sind aus dem Stand der Technik beispielsweise aus den Druckschriften WO 2017 / 121 802 A1, WO 2017 / 121 801 A1, WO 2017 / 121 801 A1, WO 2017 / 121 799 A1, WO 2017/ 121 798 A1, WO 2017/ 121 797 A1, WO 2017/ 121 796 A1 und WO 2019/002 293 A1 und insbesondere aus der EP 2 017 221 bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungsmaschine übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Es ist eine Herausforderung, die Getränkesubstanz, insbesondere auch vor der Verwendung des Kartuschensystems in der Getränkezubereitungsmaschine, sicher und stabil in der Kartusche aufzubewahren. Hierbei ist es wichtig, dass die Frische und Qualität der Getränkesubstanz erhalten bleibt. Gleichzeitig sollte eine zuverlässiger und reproduzierbarer Getränkeherstellungsprozess durch das Kartuschensystem ermöglicht werden.

### Offenbarung der Erfindung

Es ist daher eine Aufgabe der vorliegenden Erfindung ein in eine Getränkezubereitungsmaschine einsetzbares Kartuschensystem zur Herstellung eines Getränks bereitzustellen, mit dem eine vorteilhafte Aufbewahrung der Getränkesubstanz und eine hochwertiger Getränkezubereitung möglich sind, wobei das Kartuschensystem vorzugsweise besonders kosteneffizient herstellbar ist.

Diese Aufgabe wird durch ein Kartuschensystem gemäß Anspruch 1 gelöst.

Das erfindungsgemäße Kartuschensystem hat gegenüber dem Stand der Technik den Vorteil, dass das Kartuschensystem mithilfe der Zwischenkappe kosteneffizient und mit vorteilhafter Dichtigkeit ausgebildet werden kann. Insbesondere kann die Herstellung des Kartuschensystems verbessert werden kann, da durch die Zwischenkappe die Verwendung besonders kostengünstiger und rohstoffsparender Dichtelemente zur Abdichtung der Öffnung der Kartusche ermöglicht wird. Vorzugsweise sorgen derartige Dichtelemente dafür, dass die Getränkesubstanz vor dem Start des Getränkeherstellungsprozesses innerhalb des Reservoirs verbleibt und dort für eine lange Haltbarkeit und ein gleichbleibendes Aroma hermetisch abgedichtet ist. So können erfindungsgemäß beispielsweise vorteilhaft besonders dünne Dichtelemente, wie Folien, zur Abdichtung der Kartusche verwendet werden. Gleichzeitig ist es erfindungsgemäß dennoch möglich, eine dichte und stabile Verbindung zwischen dem Dichtelement und der Kartusche, insbesondere durch die Nutzung der Zwischenkappe, zu erreichen. Es ist ein besonderer Vorteil, dass die Zwischenkappe zur Positionierung und Fixierung des Dichtelements verwendbar ist, insbesondere bevor das Dichtelement mit der Kartusche verbunden wird. Somit kann die Anbringung des Dichtelements an der Kartusche mithilfe der Zwischenkappe vorteilhaft vorbereitet und verbessert werden. Es ist ferner ein Vorteil des erfindungsgemäßen Kartuschensystems, dass das Reservoir während des Getränkeherstellungsprozesses mit einem vergleichsweise hohen Druck ausgeleert werden kann, ohne dass unerwünschte Undichtigkeiten, beispielweise im Befestigungsbereich des Dichtelements an der Kartusche entstehen. Hierdurch kann die Bezugszeit verringert werden, ohne dass hierbei eine Geschmacksbeeinträchtigung beim herzustellenden Getränk droht. Es ist ein weiterer Vorteil der vorliegenden Erfindung, dass sich die relative Orientierung und Ausrichtung der Kartusche und der Kartuschenaufnahme mithilfe der Zwischenkappe besonders vorteilhaft festlegen lässt. Hierdurch kann eine festlegbare Ausrichtung der Kartusche in der Getränkezubereitungsmaschine erreicht werden, was beispielsweise vorteilhaft dafür ist, ein an dem Kartuschensystem angebrachtes Informationselement, wie einen QR-Code oder einen Strichcode, in einem in die Getränkezubereitungsmaschine eingebrachten Zustand des Kartuschensystems auszulesen.

Mithilfe der Zwischenkappe kann das Dichtelement mit hochwertiger Dichtigkeit an der Kartusche angebracht werden. Es ist somit möglich, eine Abdichtung des Reservoirs der Kartusche zu erreichen, die beispielsweise bei Erschütterungen während des Transports oder der Lagerung des Kartuschensystems nicht undicht wird, sodass keine Gase oder Flüssigkeiten aus der Kartusche austreten. Es ist denkbar, flüssige Getränkesubstanzen mit einem höheren Kohlensäuregehalt im Reservoir vorzuhalten. Der höhere Kohlensäuregehalt kann sich positiv sowohl auf den Geschmack des herzustellenden Getränks als auch auf das Mindesthaltbarkeitsdatum der Kartusche auswirken. Einige Getränkesubstanzen benötigen zum Erhalt Ihrer Frische und Qualität dabei einen hohen Innendruck im Reservoir der Kartusche, der insbesondere über eine Vorkarbonisierung bereitgestellt wird. Anderer Getränkesubstanzen benötigen lediglich einen geringen Überdruck oder keinen Überdruck.

Es ist vorzugsweise möglich, dass die Kartusche und die Kartuschenaufnahme mithilfe der Zwischenkappe miteinander verbunden sind. Es ist insbesondere denkbar, dass die Kartusche und die Kartuschenaufnahme durch die Zwischenkappe fest oder reversibel verbunden sind.

Die Kartusche kann aus Glas gefertigt sein, aber erfindungsgemäss ist sie vollständig oder teilweise aus Kunststoff gefertigt.

Es ist alternativ denkbar, dass die Kartusche einen aus Aluminium gefertigten Hauptkörper aufweist, der in seinem typischen Wandungsbereich vorzugsweise eine Wandstärke zwischen 0,01 und 0,5 Millimeter, bevorzugt zwischen 0,01 und 0,2 Millimeter, besonders bevorzugt zwischen 0,03 und 0,1 Millimeter und ganz besonders bevorzugt von im Wesentlichen 0,05 Millimeter, insbesondere mit einer Fehlertoleranz von maximal 15%. Ein aus Aluminium gefertigter Hauptkörper ist beispielsweise durch Tiefziehen oder Fließpressen herstellbar.

Die Kartusche kann derart ausgebildet werden, dass sie einem Innendruck von bis zu 12 bar, bevorzugt bis zu 10 bar besonders bevorzugt bis zu 8 bar und ganz besonders bevorzugt bis zu 6 bar ohne Aufzuplatzen standhält (bei einer Temperatur von 20° C und einem Außendruck von 1 bar). Das Reservoir umfasst dabei vorzugsweise ein Volumen zwischen 10 und 500 Milliliter, besonders bevorzugt zwischen 30 und 90 Milliliter und ganz besonders bevorzugt von im Wesentlichen 60 Milliliter. Das Kartuschensystem weist insbesondere eine flüssige Getränkesubstanz auf, welche vorzugsweise kohlensäurehaltig ist. Es ist alternativ denkbar, dass die flüssige Getränkesubstanz nicht kohlensäurehaltig ist. Besonders bevorzugt umfasst die flüssige Getränkesubstanz ein Getränkekonzentrat, insbesondere einen Sirup.

Vorteilhafte Ausgestaltungen und Weiterbildungen der Erfindung sind den Unteransprüchen sowie der Beschreibung unter Bezugnahme auf die Zeichnungen entnehmbar.

Gemäß einer bevorzugten Ausführungsform der vorliegenden Erfindung ist vorgesehen, dass das Kartuschensystem ein Dichtelement umfasst, wobei eine Öffnung der Kartusche, insbesondere in einem Ausgangszustand des Kartuschensystems, durch das Dichtelement verschlossen ist. Die Öffnung ist insbesondere eine Öffnung des Hauptkörpers der Kartusche, so dass der Hauptkörper im Ausgangszustand des Kartuschensystems auf seiner dem Kartuschenboden gegenüberliegenden Seite von dem Dichtelement verschlossen ist. Der Ausgangszustand des Kartuschensystems bezieht sich auf den Zustand vor der Getränkezubereitung, in dem das Kartuschensystem vorzugsweise jedoch bereits fertig hergestellt ist. Das Dichtelement ist zum Verschließen der Öffnung der Kartusche vorgesehen und kann hierfür an der Kartusche, insbesondere an einer Kartuschenwandung der Kartusche, befestigt sein. In vorteilhafter Weise sorgt das Dichtelement dafür, dass die Getränkesubstanz vor dem Start des Getränkeherstellungsprozesses innerhalb des Reservoirs verbleibt und dort für eine lange Haltbarkeit und ein gleichbleibendes Aroma hermetisch abgedichtet ist.

Es ist denkbar, dass die Öffnung der Kartusche kreisrund ausgebildet ist. Es ist möglich, dass die Öffnung einen Durchmesser zwischen 10 und 50 mm aufweist, besonders bevorzugt zwischen 15 und 30 mm, weiter besonders bevorzugt von beispielsweise mindestens 18 mm (insbesondere mit einer Fehlertoleranz von maximal 15%).

Gemäß einer bevorzugten Ausführungsform der vorliegenden Erfindung ist vorgesehen, dass das erste Gegenverbindungsmittel form-, kraft- und/oder stoffschlüssig mit dem ersten Verbindungsmittel verbunden ist. Es ist bevorzugt denkbar, dass das erste Verbindungsmittel umlaufend um die Kartusche, insbesondere umlaufen um die Kartuschenwandung der Kartusche, ausgebildet ist. Es ist bevorzugt denkbar, dass das erste Verbindungsmittel umlaufend an einer Außenseite der Kartuschenwandung der Kartusche ausgebildet ist. Es ist bevorzugt denkbar, dass das erste Gegenverbindungsmittel vollumfänglich um die Zwischenkappe, insbesondere an einer Innenseite der Zwischenkappe, ausgebildet ist.

Gemäß einer bevorzugten Ausführungsform der vorliegenden Erfindung ist vorgesehen, dass das erste Verbindungsmittel ein Außengewinde umfasst, wobei das erste Gegenverbindungsmittel ein Innengewinde umfasst, wobei die Kartusche und die Zwischenkappe insbesondere durch das Außengewinde der Kartusche und das Innengewinde der Zwischenkappe miteinander verbunden sind. Durch das Außengewinde und das Innengewinde kann die Zwischenkappe mit besonders hoher Präzision auf die Kartusche aufgeschraubt sein. Dies ermöglicht eine besonders vorteilhafte Positionierung des Dichtelements zur Anbringung des Dichtelements an der Kartusche. Hierdurch kann eine dichte Verbindung zwischen dem Dichtelement und der Kartusche mit besonders hoher Zuverlässigkeit ausgebildet werden. Die Zwischenkappe ist vorzugsweise als Schraubkappe ausgebildet.

Alternativ oder zusätzlich ist es denkbar, dass das erste Verbindungsmittel zur Verbindung mit dem ersten Gegenverbindungsmittel eine oder mehrere Rastsicken, und/oder einen oder mehrere Rastwulste, und/oder einen oder mehrere Hinterschnitte umfasst, wobei das erste Gegenverbindungsmittel vorzugsweise eine oder mehrere Rastsicken, und/oder einen oder mehrere Rastwulste, und/oder einen oder mehrere Hinterschnitte umfasst.

Es kann vorgesehen werden, dass die Kartusche ein erstes Verdrehsicherungsmittel aufweist und/oder dass die Zwischenkappe ein weiteres erstes Verdrehsicherungsmittel aufweist, wobei eine relative Orientierung zwischen der Kartusche und der Zwischenkappe mithilfe des ersten Verdrehsicherungsmittels und/oder des weiteren ersten Verdrehsicherungsmittels festgelegt ist. Durch das erste Verdrehsicherungsmittel und/oder das weitere erste Verdrehsicherungsmittel kann somit vorteilhafterweise eine relative Orientierung bzw. Ausrichtung der Kartusche und der Zwischenkappe in einem verbundenen Zustand der Kartusche und der Zwischenkappe festgestellt sein. Ferner kann das erste Verdrehsicherungsmittel und/oder das weitere erste Verdrehsicherungsmittel in vorteilhafter Weise ein unerwünschtes Lösen der Zwischenkappe von der Kartusche verhindern. Insbesondere ist das erste Verdrehsicherungsmittel und/oder das weitere erste Verdrehsicherungsmittel derart ausgelegt, dass ein Aufschrauben mit anschließendem Verrasten ermöglicht wird, so dass durch die Verrastung ein späteres Losschrauben verhindert wird und/oder eine festgelegte relative Orientierung der Zwischenkappe zur Kartusche erzielbar ist.

Das erste Verdrehsicherungsmittel der Kartusche kann eine insbesondere vertikale Rippe und/oder eine insbesondere vertikale Nut und/oder das weitere erste Verdrehsicherungsmittel der Zwischenkappe kann eine insbesondere vertikale Rippe und/oder eine insbesondere vertikale Nut umfassen. Auch ein Hinterschnitt, insbesondere in Umfangsrichtung, oder eine federnde Zunge sind als erstes Verdrehsicherungsmittel und/oder als weiteres erstes Verdrehsicherungsmittel alternativ oder zusätzlich denkbar. Die vertikalen Nuten und/oder Rippen erstrecken sich besonders bevorzugt parallel zur einer axialen Richtung der Kartusche.

Das erste Verdrehsicherungsmittel kann als Teil des Außengewindes der Kartusche und/oder angrenzend an das Außengewinde der Kartusche ausgebildet ist, und/oder das weitere erste Verdrehsicherungsmittel kann als Teil des Innengewindes der Zwischenkappe und/oder angrenzend an das Innengewinde der Zwischenkappe ausgebildet sein. Somit ist es besonders vorteilhaft möglich, dass eine relative Position der Kartusche und er Zwischenkappe zueinander in einem Zustand, in dem die Zwischenkappe auf die Kartusche aufgeschraubt ist, durch das erste Verdrehsicherungsmittel und/oder das weitere erste Verdrehsicherungsmittel festgelegt ist. Hierdurch kann sowohl die Drehorientierung zwischen der Kartusche und der Zwischenkappe festgelegt sein, als auch eine Distanz bzw. ein Abstand zwischen einem Bodenbereich der Zwischenkappe und einem Rand und/oder einer Stirnfläche der Kartuschenwandung. Diese präzise Festlegung des Abstands zwischen dem Bodenbereich der Zwischenkappe und dem Rand und/oder der Stirnfläche der Kartuschenwandung hat besondere Vorteile bei der Anbringung des Dichtelements an der Kartuschenwandung. Beispielsweise kann somit ein als Dichtfolie ausgebildetes Dichtelement - für den Verbindungsprozess des Dichtelements an der Kartuschenwandung - präzise und mit vergleichsweise geringer Toleranz mithilfe der Zwischenkappe an einer Stirnfläche der Kartuschenwandung angeordnet werden. Diese präzise Anordnung ermöglicht dann ein vorteilhaftes induktives Schweißen und/oder Kleben des Dichtelements an die Stirnfläche der Kartuschenwandung. Auch ein konduktives Schweißen des Dichtelements an die Stirnfläche der Kartuschenwandung ist alternativ denkbar.

Gemäß einer bevorzugten Ausführungsform der vorliegenden Erfindung ist vorgesehen, dass die Zwischenkappe einen Bodenbereich und eine Zwischenkappenwandung aufweist, wobei sich die Zwischenkappenwandung insbesondere senkrecht von dem Bodenbereich ausgehend und umlaufend um den Bodenbereich erstreckt, wobei die Zwischenkappe bevorzugt napfförmig ausgebildet ist. Zur Verbindung des Dichtelements mit der Kartusche, ist es besonders vorteilhaft denkbar, dass das Dichtelement in der Napfform der Zwischenkappe angeordnet wird und vorzugsweise an der Zwischenkappe, beispielsweise über einen Kunststoff oder ein Wachs, befestigt wird. Es ist dabei besonders bevorzugt denkbar, dass das Dichtelement am Bodenbereich der Zwischenkappe befestigt wird. Mit dem so in der Zwischenkappe angeordneten Dichtelement ist die Zwischenkappe dann mit der Kartusche verbindbar, insbesondere verschraubbar. Hierdurch wird das Dichtelement so angeordnet, dass es mit der Kartuschenwandung, insbesondere mit der Stirnfläche der Kartuschenwandung, dicht verbunden werden kann, insbesondere durch induktives Schweißen oder durch Kleben. Die Zwischenkappe bleibt besonders bevorzugt auch nach der Befestigung des Dichtelements an der Kartusche mit der Kartusche verbunden, insbesondere verschraubt. Das Dichtelement ist somit nach seiner Befestigung an der Kartusche in axiale Richtung zwischen der Kartuschenwandung und dem Bodenbereich der Zwischenkappe angeordnet.

Gemäß einer bevorzugten Ausführungsform der vorliegenden Erfindung ist vorgesehen, dass der Bodenbereich der Zwischenkappe eine Durchgangsöffnung aufweist, insbesondere zur Durchführung eines Aufstechdorns durch die Durchgangsöffnung des Bodenbereichs. Der Aufstechdorn kann bei der Getränkezubereitung in vorteilhafter Weise durch die Durchgangsöffnung der Zwischenkappe geführt werden und das Dichtelement aufstechen und/oder perforieren. Die Zwischenkappe muss daher nach der Anbringung des Dichtelements an der Kartusche nicht von der Kartusche entfernt werden. Es ist denkbar, dass die Durchgangsöffnung einen Hauptteil des Bodenbereichs der Zwischenkappe ausmacht, sodass der Bodenbereich beispielsweise lediglich ringförmig um die Durchgangsöffnung vorhanden ist.

Es ist denkbar, dass die Durchgangsöffnung des Bodenbereichs der Zwischenkappe einen Durchmesser aufweist, der größer ist als ein Außendurchmesser des Aufstechdorns.

Es ist denkbar, dass die Durchgangsöffnung des Bodenbereichs der Zwischenkappe einen Durchmesser von mindestens 7 mm, bevorzugt von mindestens 8 mm aufweist.

Gemäß einer bevorzugten Ausführungsform der vorliegenden Erfindung ist vorgesehen, dass das Dichtelement zwischen einem Rand einer Kartuschenwandung der Kartusche und dem Bodenbereich der Zwischenkappe angeordnet ist. Insbesondere ist ein peripherer Randbereich des Dichtelements zwischen dem Rand der Kartuschenwandung und dem Bodenbereich der Zwischenkappe angeordnet.

Gemäß einer bevorzugten Ausführungsform der vorliegenden Erfindung ist vorgesehen, dass das Dichtelement eine Dichtfolie umfasst. Insbesondere ist ein peripherer Randbereich der Dichtfolie zwischen dem Rand der Kartuschenwandung und dem Bodenbereich der Zwischenkappe angeordnet. Es ist möglich, dass das Dichtelement vollständig als Dichtfolie ausgebildet ist oder dass lediglich ein Teil des Dichtelements als Dichtfolie ausgebildet ist. Im Ausgangszustand des Kartuschensystems wird das Reservoir der Kartusche durch die Dichtfolie vorzugsweise hermetisch abgedichtet, wobei während des Getränkeherstellungsprozesses die Dichtfolie von einem Aufstechdorn der Kartuschenaufnahme leicht perforierbar ist, um die Getränkesubstanz aus dem Reservoir möglichst schnell in die Mischkammer der Kartuschenaufnahme zu überführen.

Als Dichtfolie wäre denkbar eine Kunststofffolie, eine Aluminiumfolie oder eine Mehrschichtfolie aus Kunststoff und/oder Aluminium. Alternativ oder zusätzlich ist es denkbar, dass die Dichtfolie einen Schaum, ein Papier und/oder andere Materialien umfasst. Auch eine Kombination von Kunststoff, und/oder Aluminium, und/oder Papier, und/oder Schaum, und/oder weiteren Materialien ist denkbar. Die Ausbildung des Dichtelements als Dichtfolie ist besonders bevorzugt für Getränkesubstanzen möglich, die ohne Überdrück oder mit einem vergleichsweise geringen Überdruck in dem Reservoir eingeschlossen werden. Durch die Dichtfolie kann eine besonders kosteneffiziente Abdichtung erfolgen.

Das Dichtelement, insbesondere die Dichtfolie, könnte an die Kartusche, insbesondere an die Kartuschenwandung, geklebt, gesiegelt und/oder geschweißt werden. Somit ist das Dichtelement an der Kartuschenwandung befestigt und dichtet einen Innenraum der Kartusche und somit das Reservoir der Kartusche ab. Vorzugsweise ist die Dichtfolie im an der Kartusche angebrachten Zustand dabei zumindest im Wesentlichen flach ausgebildet. Die Dichtfolie ist vorzugsweise mit einer Stirnfläche des Randes der Kartuschenwandung verbunden. Alternativ ist es beispielsweise auch denkbar, dass das Dichtelement an der Kartuschenwandung gecrimpt ist, wobei das Dichtelement insbesondere eine Crimpkappe umfasst. Es ist denkbar, dass eine Kartusche mit unterschiedlichen Dichtelementen und Anbringungsverfahren für die Dichtelemente an der Kartusche kombinierbar ist, ohne dass eine bauliche Änderung der Kartusche nötig wird. Dies erhöht die Einsatzmöglichkeiten der Kartusche bzw. des Kartuschensystems sowie die Skalierbarkeit auf besonders kosteneffiziente Weise.

So könnte die Dichtfolie an dem Rand der Kartuschenwandung, insbesondere an einer Stirnfläche der Kartuschenwandung, durch induktives Schweißen befestigt werden. Hierdurch wird eine besonders dichte Anbringung der Dichtfolie an der Kartusche ermöglicht, die gleichzeitig kosteneffizient durchführbar ist. Mithilfe von induktivem Schweißen kann auch beim Vorhandsein typischer Unebenheiten an der Stirnfläche der Kartusche dennoch eine vorteilhafte Verbindung zwischen der Dichtfolie und der Kartusche ausgebildet werden. Es ist insbesondere denkbar, dass die Kartusche, insbesondere die Glaskartusche, mithilfe einer Heißendvergütung oder einer Kaltendvergütung ausgebildet wird. Es ist denkbar, dass für das induktive Schweißen der Dichtfolie an die Kartusche ein Siegellack verwendet wird, der beim induktiven Schweißen aufschmilzt, um eine Verbindung zwischen der Kartusche und der Dichtfolie auszubilden. Hierdurch kann eine besonders vorteilhafte, dichte und kosteneffiziente Abdichtung erfolgen. Es ist alternativ denkbar, dass die Dichtfolie mittels Klebstoff an der Stirnfläche der Kartuschenwandung befestigt ist.

Es ist denkbar, dass das Dichtelement eine Kunststoffkappe umfasst oder als Kunststoffkappe ausgebildet ist. Die Kunststoffkappe umfasst vorzugsweise eine Bohrung oder Stanzung mit einer Dichtfolie, die innen oder außen aufgebracht, gesiegelt oder geschweißt ist. Es ist gemäß einer Ausführungsform der vorliegenden Erfindung denkbar, dass die Kunststoffkappe des Dichtelements mithilfe von Spritzgießen ausgebildet ist. Die Kunststoffkappe ist somit vorzugsweise ein Spritzteil. Es ist dabei denkbar, dass die Kunststoffkappe als Crimpkappe, Rastkappe oder Schraubkappe ausgebildet ist. Es ist denkbar, dass die Kunststoffkappe eine Schwächung zur Durchführung des Aufstechdorns aufweist. Die Schwächung ist vorzugsweise ein Bereich der Kunststoffkappe mit reduzierter Wandstärke bzw. Dicke. Die Schwächung ist vorzugsweise derart ausgebildet, dass das Dichtelement im Bereich dieser Schwächung von dem Aufstechdorn geöffnet und/oder durchdrungen werden kann. Es ist denkbar, dass diese Schwächung bei der Ausbildung der Kunststoffkappe, insbesondere beim Spritzgießen, als verdünnter Bereich der Kunststoffkappe erzeugt wird. Somit wird die Schwächung besonders bevorzugt beim Spritzengießen der Kunststoffkappe erzeugt, wodurch keine weitere Nachbehandlung der Kunststoffkappe zur Erzeugung der Schwächung nötig ist. Gemäß einer Ausführungsform der vorliegenden Erfindung ist es denkbar, dass die Schwächung als vollflächige, insbesondere kreisflächige, Schwächung in der Kunststoffkappe ausgebildet ist. Alternativ sind auch andere Geometrien für die Schwächung denkbar. Beispielsweise ist es denkbar, dass die Schwächung ringförmig oder als Kreislinie ausgebildet ist.

Es ist denkbar, dass die Zwischenkappe eine Kunststoffkappe umfasst oder als Kunststoffkappe ausgebildet ist. Es ist gemäß einer Ausführungsform der vorliegenden Erfindung denkbar, dass die Kunststoffkappe der Zwischenkappe mithilfe von Spritzgießen ausgebildet ist. Die Kunststoffkappe ist somit vorzugsweise ein Spritzteil. Es ist dabei denkbar, dass die Kunststoffkappe als Crimpkappe, Rastkappe oder Schraubkappe ausgebildet ist. Es ist denkbar, dass die Kunststoffkappe eine Durchgangsöffnung, Stanzung und/oder Schwächung zur Durchführung des Aufstechdorns aufweist. Die Schwächung ist vorzugsweise ein Bereich der Kunststoffkappe mit reduzierter Wandstärke bzw. Dicke. Die Schwächung ist vorzugsweise derart ausgebildet, dass die Zwischenkappe im Bereich dieser Schwächung von dem Aufstechdorn geöffnet und/oder durchdrungen werden kann. Es ist denkbar, dass diese Schwächung bei der Ausbildung der Kunststoffkappe, insbesondere beim Spritzgießen, als verdünnter Bereich der Kunststoffkappe erzeugt wird. Somit wird die Schwächung besonders bevorzugt beim Spritzengießen der Kunststoffkappe erzeugt, wodurch keine weitere Nachbehandlung der Kunststoffkappe zur Erzeugung der Schwächung nötig ist. Gemäß einer Ausführungsform der vorliegenden Erfindung ist es denkbar, dass die Schwächung als vollflächige, insbesondere kreisflächige, Schwächung in der Kunststoffkappe ausgebildet ist. Alternativ sind auch andere Geometrien für die Schwächung denkbar. Beispielsweise ist es denkbar, dass die Schwächung ringförmig oder als Kreislinie ausgebildet ist.

Es könnte vorgesehen werden, dass die Zwischenkappe mit der Kartuschenaufnahme verbunden ist. Die Zwischenkappe ist insbesondere in die Kartuschenaufnahme einbringbar und kann mit dieser verbunden werden. Es ist denkbar, dass die Kartuschenaufnahme fest oder reversibel mit der Zwischenkappe verbunden ist.

Gemäß einer bevorzugten Ausführungsform der vorliegenden Erfindung ist vorgesehen, dass die Zwischenkappe ein zweites Verbindungsmittel aufweist, und/oder dass die Kartuschenaufnahme ein zweites Gegenverbindungsmittel aufweist, wobei das zweite Gegenverbindungsmittel bevorzugt form-, kraft- und/oder stoffschlüssig mit dem zweiten Verbindungsmittel verbunden ist. Es ist denkbar, dass das zweite Gegenverbindungsmittel ein zum zweiten Verbindungsmittel komplementäres Verbindungsmittel ist. Alternativ oder zusätzlich ist es denkbar, dass die Zwischenkappe mit der Kartuschenaufnahme durch Crimpen, Kleben, Siegeln, und/oder Schweißen verbunden ist.

Unter diesen Umständen wäre es denkbar, dass das zweite Verbindungsmittel eine oder mehrere Rastsicken, und/oder einen oder mehrere Rastwulste, und/oder einen oder mehrere Hinterschnitte, und/oder ein Außengewinde umfasst, wobei das zweite Gegenverbindungsmittel eine oder mehrere Rastsicken, und/oder einen oder mehrere Rastwulste, und/oder einen oder mehrere Hinterschnitte, und/oder ein Innengewinde umfasst. Der oder die Hinterschnitte sind vorzugsweise Hinterschnitte in Umfangsrichtung. Besonders bevorzugt ist es beispielsweise denkbar, dass das zweite Verbindungsmittel der Zwischenkappe eine Rastsicke umfasst, die mit einem Rastwulst des zweiten Gegenverbindungsmittels der Kartuschenaufnahme zusammenwirkt, um eine Rastverbindung herzustellen. Es ist bevorzugt denkbar, dass das zweite Verbindungsmittel umlaufend um die Zwischenkappe, insbesondere an einer Außenseite der Zwischenkappe, ausgebildet ist. Es ist bevorzugt denkbar, dass das zweite Gegenverbindungsmittel vollumfänglich um die Kartuschenaufnahme, insbesondere an einer Innenseite der Kartuschenaufnahme, ausgebildet ist.

Hier wiederum wäre denkbar, dass die Zwischenkappe ein zweites Verdrehsicherungsmittel aufweist und/oder wobei die Kartuschenaufnahme ein weiteres zweites Verdrehsicherungsmittel aufweist, wobei eine relative Orientierung zwischen der Zwischenkappe und der Kartuschenaufnahme mithilfe des zweiten Verdrehsicherungsmittels und/oder des weiteren zweiten Verdrehsicherungsmittels festgelegt ist. Durch das zweite Verdrehsicherungsmittel und/oder das weitere zweite Verdrehsicherungsmittel ist eine relative Positionierung und Orientierung zwischen der Zwischenkappe und der Kartuschenaufnahme in einem verbundenen Zustand der Kartuschenaufnahme und der Zwischenkappe festgelegt. Es ist ferner vorteilhafterweise möglich, dass das zweite Verdrehsicherungsmittel und/oder das weitere zweite Verdrehsicherungsmittel verhindern, dass sich die Kartuschenaufnahme und die Zwischenkappe ungewollt voneinander lösen können. Es ist besonders vorteilhaft möglich, dass das zweite Verbindungsmittel das zweite Verdrehsicherungsmittel umfasst und/oder dass das zweite Gegenverbindungsmittel das weitere zweite Verdrehsicherungsmittel umfasst. Es ist besonders vorteilhaft möglich, dass das zweite Verbindungsmittel ein Rastmittel, insbesondere einen Rastwulst oder eine Rastsicke, umfasst, das in Umfangsrichtung einen abgeflachten Bereich aufweist. Es ist besonders vorteilhaft möglich, dass das zweite Gegenverbindungsmittel ein dazu komplementäres Rastmittel, insbesondere einen Rastwulst oder eine Rastsicke, umfasst, das in Umfangsrichtung ebenfalls einen abgeflachten Bereich aufweist. Mithilfe der abgeflachten Bereiche ist eine Verdrehsicherung der Zwischenkappe und der Kartuschenaufnahme ausgebildet ist.

Es ist denkbar, die Kartusche, die Zwischenkappe und/oder die Kartuschenaufnahme mit einer Abflachung oder ohne eine Abflachung auszuführen. Es ist beispielsweise möglich, die Kartusche, die Zwischenkappe und/oder die Kartuschenaufnahme jeweils an ihrem Umfang, insbesondere in Umfangsrichtung, mit einer Abflachung auszuführen, sodass eine relative Orientierung der Kartusche, Zwischenkappe und/oder Kartuschenaufnahme durch die Abflachung vorgegeben ist. Derart kann beispielsweise eine Verdrehsicherung erreicht werden. Alternativ können die Kartusche, die Zwischenkappe und/oder die Kartuschenaufnahme auch jeweils ohne eine Abflachung in Umfangsrichtung, insbesondere rund, ausgebildet werden.

Mittels eines Abdichtungsmittels könnte eine Abdichtung zwischen der Kartusche und der Zwischenkappe ausgebildet werden.

Es ist insbesondere denkbar, dass das Abdichtungsmittel teilweise oder vollständig zwischen einer von der Kartusche abgewandten Oberseite des Dichtelements und der Zwischenkappe, insbesondere einem Bodenbereich der Zwischenkappe, angeordnet ist, sodass das Abdichtungsmittel den Übergang zwischen der Zwischenkappe und der Kartusche, insbesondere im Bereich ihres Dichtelements, abdichtet. Das Abdichtungsmittel dient zusätzlich oder alternativ zu seiner Funktion als Abdichtung in vorteilhafter Weise dem Ausgleich von Fertigungstoleranzen der Kartusche, des Dichtelements und/oder der Zwischenkappe. Gemäß einer bevorzugten Ausführungsform der vorliegenden Erfindung ist es vorgesehen, dass das Abdichtungsmittel als Teil des Dichtelements ausgebildet ist und/oder dass das Abdichtungsmittel ein von dem Dichtelement separates Element ist, das insbesondere zwischen der Kartusche und der Zwischenkappe angeordnet ist. Das Abdichtungsmittel kann somit einstückig mit dem Dichtelement oder als von dem Dichtelement separates Bauteil ausgebildet sein. Für das Abdichtungsmittel kommen unterschiedliche geeignete Materialien, beispielsweise verschiedene Kautschuk-Arten und/oder Kunststoffe oder weitere Materialien infrage.

Das Abdichtungsmittel könnte einen Dichtring, ein vollflächiges Abdichtungsmittel mit einer Bohrung, und/oder einen Schaum aufweisen.

Es ist dabei denkbar, dass das Abdichtungsmittel als einlegbares Element ausgebildet ist. Es ist möglich, dass das einlegbare Element (beispielsweise ein Dichtring) zwischen der Kartusche, insbesondere der in Richtung des Bodenbereichs der Zwischenkappe zeigenden Stirnfläche der Kartusche, und der Zwischenkappe angeordnet ist. Es ist insbesondere denkbar, dass das Abdichtungsmittel als O-Ring ausgebildet ist. Es ist alternativ denkbar, dass das Abdichtungsmittel vollflächig mit einer Bohrung/Aussparung für den Aufstechdorn ausgebildet ist. Alternativ ist es denkbar, dass das Abdichtungsmittel als Teil des Dichtelements und/oder verbunden mit dem Dichtelement, insbesondere an einer von der Kartusche abgewandten Oberseite des Dichtelements, ausgebildet ist. Es ist insbesondere denkbar, dass das Abdichtungsmittel einen Schaum (bzw. geschäumten Bereich) des Dichtelements umfasst, der an der Oberseite des Dichtelements, insbesondere in einem peripheren Außenbereich des Dichtelements, angeordnet ist.

Es ist alternativ oder zusätzlich denkbar, dass das Abdichtungsmittel, beispielsweise ein O-Ring und/oder Schaum, im Bereich des ersten Verbindungsmittels und/oder Gegenverbindungsmittels zwischen der Kartusche und der Zwischenkappe angeordnet und/oder ausgebildet ist. Alternativ oder zusätzlich kann die zusätzliche Abdichtung zwischen der Kartusche und der Zwischenkappe beispielsweise durch eine Ausführung der Zwischenkappe mithilfe eines Mehrkomponenten-Kunststoffs, insbesondere eines Zweikomponenten-Kunststoffs, erfolgen.

Unter diesen Umständen ist es denkbar, dass das Abdichtungsmittel als Teil der Zwischenkappe, insbesondere mithilfe eines Mehrkomponenten-Kunststoff-Spritzgießens, bevorzugt eines Zweikomponenten-Kunststoff-Spritzgießens, ausgebildet wird. Es ist somit denkbar, dass das Abdichtungsmittel einstückig mit der Zwischenkappe oder einem Teil der Zwischenkappe (also als Bestandteil der Zwischenkappe) ausgebildet ist. Hierbei ist es insbesondere möglich, dass die Zwischenkappe (oder zumindest ein Teil der Zwischenkappe) und das Abdichtungsmittel gemeinsam mithilfe eines Zweikomponenten-Spritzgießens ausgeführt werden. Bevorzugt ist es möglich, dass der Bereich des Abdichtungsmittels aus einem anderen Kunststoff gefertigt wird als der übrige Teil der Zwischenkappe. Beispielsweise ist es denkbar, dass der Bereich des Abdichtungsmittels aus einem Kunststoff gefertigt wird, der weicher ist als die übrige Zwischenkappe. Es ist dabei denkbar, dass das Abdichtungsmittel (insbesondere als Bestandteil der Zwischenkappe) als ein in Richtung der Stirnfläche der Kartuschenwandung zeigender Bereich der Zwischenkappe ausgeführt ist, insbesondere als ein Bereich der Zwischenkappe, der an die Stirnfläche der Kartuschenwandung und/oder das Dichtelement angrenzt. Es ist alternativ oder zusätzlich denkbar, dass das Abdichtungsmittel (insbesondere als Bestandteil der Zwischenkappe oder als separates Einlegeteil) seitlich/radial an der Kartuschenwandung angeordnet ist und/oder gegen eine Fase und/oder einen Radius zwischen der Stirnfläche der Kartuschenwandung und dem Umfang.

Es könnte vorgesehen werden, dass mithilfe eines weiteren Abdichtungsmittels eine Abdichtung zwischen der Zwischenkappe und der Kartuschenaufnahme ausgebildet ist. Es ist insbesondere denkbar, dass das weitere Abdichtungsmittel teilweise oder vollständig zwischen der Zwischenkappe und der Kartuschenaufnahme angeordnet ist, sodass das weitere Abdichtungsmittel den Übergang zwischen der Zwischenkappe und der Kartuschenaufnahme abdichtet. Das weitere Abdichtungsmittel dient zusätzlich oder alternativ zu seiner Funktion als Abdichtung in vorteilhafter Weise dem Ausgleich von Fertigungstoleranzen der Zwischenkappe und/oder der Kartuschenaufnahme. Gemäß einer bevorzugten Ausführungsform der vorliegenden Erfindung ist es vorgesehen, dass das weitere Abdichtungsmittel einen Dichtring, insbesondere einen O-Ring, aufweist.

Es könnte vorgesehen werden, dass das weitere Abdichtungsmittel im Bereich des zweiten Verbindungsmittels der Zwischenkappe und/oder im Bereich des zweiten Gegenverbindungsmittels der Kartuschenaufnahme angeordnet ist. Es ist insbesondere denkbar, dass das weitere Abdichtungsmittel teilweise oder vollständig zwischen dem zweiten Verbindungsmittel und dem zweiten Gegenverbindungsmittel angeordnet ist. Es ist dabei beispielsweise möglich, dass das zweite Verbindungsmittel eine Rastsicke, einen Rastwulst, einen Hinterschnitt, und/oder ein Außengewinde umfasst und/oder dass das zweite Gegenverbindungsmittel eine Rastsicke, einen Rastwulst, einen Hinterschnitt, und/oder ein Innengewinde umfasst, wobei die mithilfe des zweiten Verbindungsmittels und des zweiten Gegenverbindungsmittels ausgebildete Verbindung zwischen der Zwischenkappe und der Kartuschenaufnahme durch das weitere Abdichtungsmittel abgedichtet ist.

Es wäre denkbar, dass die Kartusche einen insbesondere napfförmig ausgebildeten Hauptkörper umfasst, wobei der Hauptkörper mithilfe der Kartuschenwandung, die auf einer Seite durch einen Kartuschenboden verschlossen ist, ausgebildet ist, wobei der Hauptkörper insbesondere das Reservoir umfasst. Die Kartuschenwandung und der Kartuschenboden sind insbesondere einstückig ausgebildet. Es ist bevorzugt denkbar, dass die Kartuschenwandung zumindest in einem Hauptbereich der Kartuschenwandung zylinderförmig ausgebildet ist. Die Kartuschenwandung und der Kartuschenboden können bevorzugt durch eine Glasflasche gebildet sein. Alternativ ist es denkbar, dass die Kartuschenwandung und der Kartuschenboden durch einen Kunststoff oder ein Metall ausgebildet sind.

Gemäß einer bevorzugten Ausführungsform der vorliegenden Erfindung ist vorgesehen, dass die Kartuschenaufnahme eine Grundstruktur aufweist, welche zumindest teilweise und insbesondere vollständig aus Kunststoff gefertigt ist. Hierdurch wird vorteilhafterweise eine kostengünstige Herstellung erzielt.

Es könnte vorgesehen werden, dass die Grundstruktur eine napfförmige Ausgestaltung aufweist, deren offene Seite in Richtung der Kartusche ausgerichtet ist, wobei an einer der Kartusche gegenüberliegenden Bodenseite eine Getränkeauslassöffnung und eine nach außen offene Dornführung ausgebildet sind und wobei an der Bodenseite oder einer Seitenwandung der Grundstruktur eine Fluidzuführung ausgebildet ist. Diese Kartuschenaufnahme hat den Vorteil, dass die Fluidzuführung nicht in das Reservoir der Kartusche, sondern in die vom Reservoir separierte Mischkammer mündet. Hierdurch wird verhindert, dass durch die Fluidzuführung während des Getränkeherstellungsprozesses eine Rückkontamination der Getränkezubereitungsmaschine erfolgt. Hierfür wird das Reservoir nicht von dem Fluid durchspült, sondern die Getränkesubstanz und das Fluid gelangen vielmehr getrennt voneinander in die Mischkammer der Kartuschenaufnahme. Das Fluid wird direkt in die Mischkammer geleitet, während die Getränkesubstanz unabhängig vom Fluid in die Mischkammer überführt wird. Insbesondere ist zu diesem Zweck innerhalb der Dornführung ein verschiebbar gelagerter Aufstechdorn angeordnet, wobei der Aufstechdorn zwischen einer eingefahrenen Position, in welcher der Aufstechdorn von dem Dichtelement und insbesondere der Dichtfolie beabstandet ist, und einer ausgefahrenen Position, in welcher der Aufstechdorn das Dichtelement und insbesondere die Dichtfolie durchsticht und bis in das Reservoir ragt, verschiebbar ist. In der ausgefahrenen Position ist der Aufstechdorn dabei insbesondere auch durch die Durchgangsöffnung im Bodenbereich der Zwischenkappe geführt. Der Aufstechdorn ist im Ausgangszustand des Kartuschensystems also in der eingefahrenen Position, so dass das Reservoir durch das Dichtelement und insbesondere die Dichtfolie hermetisch abgedichtet ist, und kann zum Öffnen des Dichtelements der Kartusche von der eingefahrenen Position in die ausgefahrene Position überführt werden. In der ausgefahrenen Position wird das Dichtelement von dem Aufstechdorn perforiert oder eine Vorstanzung aufgerissen, so dass die Getränkesubstanz durch insbesondere wenigstens einen Seitenkanal am Aufstechdorn an dem Dichtelement vorbei in die Mischkammer gelangt. Es wird somit eine einfache und zuverlässige Öffnung einer zuvor aromadicht verschlossenen Kartusche in einer Getränkezubereitungsmaschine ermöglicht. Zudem hat sich gezeigt, dass eine Rückkontamination der Getränkezubereitungsmaschine unterbunden wird, insbesondere da im Reservoir kein direkt auf die Fluidzuführung wirkender Überdruck erzeugt wird. Die Ausbildung der Mischkammer in der Kartuschenaufnahme, die in die Getränkezubereitungsmaschine reversibel einsetzbar ist, sorgt vorteilhafterweise dafür, dass die Mischkammer Teil des austauschbaren Kartuschensystem ist. Auf diese Weise wird eine Verunreinigung der Getränkezubereitungsmaschine durch die Getränkesubstanz wirksam vermieden, weil lediglich Teile des austauschbaren Einweg- oder Mehrwegkartuschensystems mit der Getränkesubstanz in Kontakt gelangen.

Es könnte vorgesehen werden, dass der Aufstechdorn ein zylinder- oder kegelstumpfförmiges Basisteil und ein sich in Richtung des Reservoirs erstreckendes Aufstechteil umfasst, wobei das Aufstechteil in Form eines schräg abgeschnittenen Kegelstumpfs ausgebildet ist. Vorzugsweise ist das Aufstechteil ferner derart ausgebildet ist, dass eine schräge Schnittfläche des schräg abgeschnittenen Kegelstumpfs im Wesentlichen dem Reservoir zugewandt ist, wobei der ovale Umfang der Schnittfläche zumindest teilweise eine Schnittkante zum Perforieren des Dichtelements darstellt. Es hat sich gezeigt, dass die Schnittfläche, welche durch einen schrägen Schnitt durch den Kegelstumpf erzeugt wird, einerseits das Dichtelement einfach und mit ausreichend wenig Kraftaufwand schneidet und andererseits keine Späne oder lose Stücke von dem Dichtelement abtrennt, welche ansonsten das Getränk in ungewollter Weise verunreinigen würden. Die Dichtelementperforation sieht vorteilhafterweise derart aus, dass an derjenigen Seite des Aufstechdorns, an welchem die maximal in Richtung des Reservoirs überstehende Schnittkante ausgebildet ist, das Material des Dichtelements mit einem glatten Schnitt durchtrennt ist, während im Bereich der Schnittfläche des Aufstechteils das abgeschnittene Material des Dichtelements noch mit dem übrigen Dichtelement verbunden ist und vorzugsweise aufrollt oder zusammengefaltet ist.

Vorzugsweise umfasst der Aufstechdorn ein zwischen dem Basisteil und dem Aufstechteil angeordnetes Zwischenteil, welcher kegelstumpfförmig ausgebildet ist, wobei zwischen dem Basisteil und dem Zwischenteil ein umlaufender Absatz ausgebildet ist und wobei zwischen dem Aufstechteil und dem Zwischenteil eine umlaufende Kante ausgebildet ist. Vorteilhafterweise wird somit ein stabiler Aufstechdorn gebildet. Der Ausbildung der Kante hat den Vorteil, dass die Seitenkanäle, sofern sie sich über die Kante erstrecken, reservoirseitig einen vergrößerten Eingang aufweisen und somit die Überführung der Getränkesubstanz in Richtung Mischkammer erleichtert wird. Der Absatz dient dazu gegen einen Anschlag der Dornführung anzuschlagen, wenn der Aufstechdorn in der aufgefahrenen Position ist, sodass die Ausfahrbewegung des Aufstechdorns in Richtung der Kartusche begrenzt wird.

Es könnte vorgesehen werden, dass die Kartuschenaufnahme eine Mehrzahl von Seitenkanälen aufweist, wobei sich jeder Seitenkanal parallel zum Aufstechdorn im Bereich des Aufstechteils und im Bereich des Zwischenteils erstreckt. Die Seitenkanäle sind dabei insbesondere jeweils in Form einer in die Außenfläche des Aufstechdorns eingebrachte einseitig offene Nut ausgebildet. Vorzugsweise sind die Seitenkanäle zumindest teilweise in einem zur Schnittfläche rückwärtigen Umfangsbereich des Aufstechdorns ausgebildet. Dies hat den Vorteil, dass die Seitenkanäle an derjenigen Seite der Dichtelementperforation angeordnet sind, an welcher ein Schnitt im Material erzeugt wurde, und nicht an der gegenüberliegenden Seite, an welcher das abgeschnittene Material noch mit dem übrigen Dichtelement verbunden ist. Die Getränkesubstanz kann somit vergleichsweise ungehindert in die Seitenkanäle einströmen.

Denkbar ist, dass der Querschnitt der Seitenkanäle und/oder die Anzahl der Seitenkanäle an die Viskosität der Getränkesubstanz angepasst ist, so dass die Seitenkanäle den Fluss der Getränkesubstanz in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Gemäß einer bevorzugten Ausführungsform der vorliegenden Erfindung ist vorgesehen, dass der Aufstechdorn eine integrierte Druckluftleitung, welche die Kartuschenentladeeinrichtung ist, aufweist, wobei sich die Druckluftleitung entlang des Aufstechdorns insbesondere von einem ersten Ende des Aufstechdorns bis zu einem zweiten Ende des Aufstechdorns erstreckt. In vorteilhafter Weise sind somit drei Funktionen in den Aufstechdorn integriert: 1. Der Aufstechdorn umfasst den Aufstechteil, um das Dichtelement zu perforieren und somit die Kartusche zu öffnen 2. Der Aufstechdorn umfasst die Seitenkanäle, um ein Überführen der Getränkesubstanz in die Mischkammer zu ermöglichen 3. Der Aufstechdorn umfasst die integrierte Druckluftleitung, um Druckluft in das Reservoir zu blasen, wodurch die Getränkesubstanz unter Druck in die Mischkammer gedrückt wird.

Vorzugsweise ist am zweiten Ende ein Druckluftanschluss zum Anschluss an eine Druckluftquelle und am ersten Ende ein Druckluftauslass zum Einblasen von Druckluft in das Reservoir ausgebildet. Die in die Kartuschenaufnahme integrierte Kartuschenentladeeinrichtung umfasst im Sinne der vorliegenden Erfindung also zunächst nur eine Druckluftleitung, durch welche Druckluft von außen in das Reservoir eingeleitet werden kann. Die Kartuschenaufnahme ist derart ausgebildet, dass durch die Druckluft die Getränkesubstanz aus dem Reservoir in die Mischkammer gedrückt wird. Die Druckluft wird insbesondere von der Getränkezubereitungsmaschine bereitgestellt. Denkbar ist, dass eine Druckluftquelle direkt an den Druckluftanschluss angekoppelt wird, sobald das Kartuschensystem in die Getränkezubereitungsmaschine eingesetzt wird. Dies hat den Vorteil, dass eine Rückkontamination in Richtung der Getränkezubereitungsmaschine wirksam vermieden wird, weil die Kartuschenentladeeinrichtung insbesondere sofort beim Einsetzen des Kartuschensystems unter Druck steht und somit verhindert wird, dass Getränkesubstanz in Richtung der Druckluftleitung und insbesondere in Richtung der Druckluftquelle der Getränkezubereitungsmaschine wandert. Die Getränkesubstanz kann sich ausgehend vom Reservoir somit lediglich in Richtung der Mischkammer bewegen.

Der Druckluftanschluss ist insbesondere als Öffnung im Basisteil ausgebildet, wobei der Basisteil derart in der Kartuschenaufnahme angeordnet ist, dass der Druckluftanschluss von außerhalb der Kartuschenaufnahme zugänglich ist. Auf diese Weise wird das Anschließen der Druckluftleitung an die Druckluftquelle begünstigt.

Es kann vorgesehen werden, dass die Mischkammer einen Getränkeauslauf aufweist, durch welchen das aus einer Vermischung der Getränkesubstanz mit dem Fluid gebildete Getränk abgegeben wird, wobei das Kartuschensystem vorzugsweise derart ausgebildet ist, dass das Getränk aus dem Getränkeauslauf direkt in ein portables Gefäß einleitbar ist. In vorteilhafter Weise gerät somit weder die Getränkesubstanz noch das erzeugte Getränk in Kontakt mit einem Teil der Getränkezubereitungsmaschine, so dass nahezu jegliche (Rück-)Kontamination der Getränkezubereitungsmaschine verhindert wird. Das Fluid wird der Mischkammer separat zugeführt. Vorzugsweise wird das Fluid unter Druck in die Mischkammer eingeleitet. Das Fluid wird insbesondere von der Getränkezubereitungsmaschine bereitgestellt. Denkbar ist, dass eine Fluidquelle direkt an einen entsprechenden Fluidanschluss der Kartuschenaufnahme angekoppelt wird, sobald das Kartuschensystem in die Getränkezubereitungsmaschine eingesetzt wird. Der Fluidanschluss steht dabei über eine Fluidleitung in Fluidverbindung mit der Mischkammer. Dies hat den Vorteil, dass eine Rückkontamination in Richtung der Getränkezubereitungsmaschine wirksam vermieden wird, weil der Fluidanschluss insbesondere sofort beim Einsetzen des Kartuschensystems unter Druck steht und somit verhindert wird, dass Getränkesubstanz in Richtung der Fluidleitung und insbesondere in Richtung der Fluidquelle der Getränkezubereitungsmaschine wandert. Die Getränkesubstanz und das Getränk kann sich ausgehend von der Mischkammer somit lediglich in Richtung des Getränkeauslasses bewegen. Das Fluid umfasst insbesondere Wasser, vorzugsweise unter Druck stehendes, gekühltes und/oder karbonisiertes Trinkwasser.

Auch kann die Mischkammer mit Mischstrukturen versehen werden. Die Mischstrukturen sorgen in vorteilhafter Weise für eine verbesserte Durchmischung von Getränkesubstanz und Fluid. Hierfür sind die Mischstrukturen insbesondere derart ausgebildet, dass das in die Mischkammer einströmende Fluid verwirbelt wird. Denkbar ist, dass die Mischstruktur einen oder mehrere Mischstege umfasst, welche im Bereich der Fluidzuführung am Boden der Mischkammer angeordnet sind und sich im Wesentlichen senkrecht zur Einströmrichtung des Fluides erstrecken. Die Mischstege fungieren somit als Barrieren für das Fluid, wodurch das Fluid aufgewirbelt wird und eine bessere Durchmischung mit der Getränkesubstanz erzielt wird.

Es kann vorgesehen werden, dass die Fluidzuführung mit Fluid gespeist wird, welches durch ein Kühlaggregat gekühlt wird, wobei das Kühlaggregat Teil der Getränkezubereitungsmaschine oder eines mit der Getränkezubereitungsmaschine in Wirkverbindung stehenden separaten Kühlschranks ist. In vorteilhafter Weise sind somit Kaltgetränke herstellbar, auch wenn die Kartusche nicht gekühlt ist und beispielweise Zimmertemperatur aufweist. Die Integration des Systems in einen bestehenden Kühlschrank hat den Vorteil, dass das bestehende Kühlaggregat des Kühlschranks für die Getränkezubereitungsmaschine in effizienter Weise einfach mitgenutzt werden kann. Insbesondere bei sogenannten "side-by-side"-Kühlschränken (oft auch als amerikanische Kühlschränke bezeichnet) findet sich in der Front ausreichend Bauraum zur Integration des Systems. Denkbar ist, dass es sich bei der Getränkezubereitungsmaschine um ein Nachrüstset für einen solchen Kühlschrank handelt. Das Kühlaggregat umfasst vorzugsweise eine Kompressorkühleinheit, eine Absorberkühleinheit oder einen thermoelektrischen Kühler.

Es kann vorgesehen werden, dass die Fluidzuführung mit Fluid gespeist wird, welches durch einen Karbonisierer mit Kohlensäure versetzt wird. Denkbar ist, dass der Karbonisierer Teil der Getränkezubereitungsmaschine ist und wobei der Karbonisierer eine Aufnahme für eine COs-Patrone und eine Zuführeinrichtung zum Versetzen des Fluides mit CO₂ aus der CO₂-Patrone aufweist. Vorteilhafterweise lassen sich mit dem System somit auch mit Kohlensäure versetzte Erfrischungsgetränke herstellen. Alternativ wäre auch denkbar, dass der Karbonisierer einen externen CO₂-Anschluss aufweist.

Ein weiterer Gegenstand der vorliegenden Erfindung ist eine Getränkezubereitungsmaschine, umfassend ein Kartuschensystem gemäß einer Ausführungsform der vorliegenden Erfindung. Das Kartuschensystem ist in die Getränkezubereitungsmaschine einsetzbar. Im eingesetzten Zustand des Kartuschensystems in der Getränkezubereitungsmaschine kann das Getränk zubereitet werden. Nach der erfolgten Zubereitung kann das Kartuschensystem wieder aus der Getränkezubereitungsmaschine entnommen werden.

Ein weiterer Gegenstand der vorliegenden Erfindung ist ein Verfahren zur Herstellung eines Kartuschensystems gemäß einer Ausführungsform der vorliegenden Erfindung,
-- wobei in einem ersten Verfahrensschritt die Kartusche und die Zwischenkappe bereitgestellt werden,
-- wobei in einem zweiten Verfahrensschritt, nach dem ersten Verfahrensschritt, die Kartusche und die Zwischenkappe durch das erste Verbindungsmittel der Kartusche und das erste Gegenverbindungsmittel der Zwischenkappe miteinander verbunden werden.

Für das erfindungsgemäße Verfahren zur Herstellung eines Kartuschensystems und die erfindungsgemäße Getränkezubereitungsmaschine können die Vorteile und Ausgestaltungen Anwendung finden, die bereits im Zusammenhang mit dem erfindungsgemäßen Kartuschensystem oder im Zusammenhang mit einer Ausführungsform des erfindungsgemäßen Kartuschensystems beschrieben worden sind. Für das erfindungsgemäße Kartuschensystem und das erfindungsgemäße Verfahren zur Herstellung eines Kartuschensystems können die Vorteile und Ausgestaltungen Anwendung finden, die bereits im Zusammenhang mit der erfindungsgemäßen Getränkezubereitungsmaschine oder im Zusammenhang mit einer Ausführungsform der erfindungsgemäßen Getränkezubereitungsmaschine beschrieben worden sind. Für das erfindungsgemäße Kartuschensystem und die erfindungsgemäße Getränkezubereitungsmaschine können die Vorteile und Ausgestaltungen Anwendung finden, die bereits im Zusammenhang mit dem erfindungsgemäßen Verfahren zur Herstellung eines Kartuschensystems oder im Zusammenhang mit einer Ausführungsform des erfindungsgemäßen Verfahrens zur Herstellung eines Kartuschensystems beschrieben worden sind.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt eine schematische Schnittansicht eines Teils eines Kartuschensystems gemäß einer beispielhaften Ausführungsform der vorliegenden Erfindung.
- Figur 2: zeigt eine schematische Schnittansicht einer Zwischenkappe gemäß einer beispielhaften Ausführungsform der vorliegenden Erfindung.
- Figur 3: zeigt eine schematische perspektivische Ansicht eines Mündungsbereichs einer Kartusche gemäß einer beispielhaften Ausführungsform der vorliegenden Erfindung.
- Figur 4: zeigt eine schematische Schnittansicht eines Teils eines Kartuschensystems gemäß einer beispielhaften Ausführungsform der vorliegenden Erfindung.
- Figuren 5a, 5b und 5c: zeigen eine perspektivische Darstellung, eine schematische Schnittbildansicht und das allgemeine Funktionsprinzip eines Kartuschensystems gemäß einer beispielhaften ersten Ausführungsform der vorliegenden Erfindung.
- Figur 6: zeigt eine schematische Schnittansicht eines Teils eines Kartuschensystems gemäß einer beispielhaften Ausführungsform der vorliegenden Erfindung.
- Figur 7: zeigt eine schematische Schnittansicht eines Teils eines Kartuschensystems gemäß einer beispielhaften Ausführungsform der vorliegenden Erfindung.
- Figur 8: zeigt eine schematische perspektivische Ansicht eines geschnittenen Dichtelements gemäß einer beispielhaften Ausführungsform der vorliegenden Erfindung.
- Figur 9: zeigt eine schematische perspektivische Ansicht einer geschnittenen Zwischenkappe gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

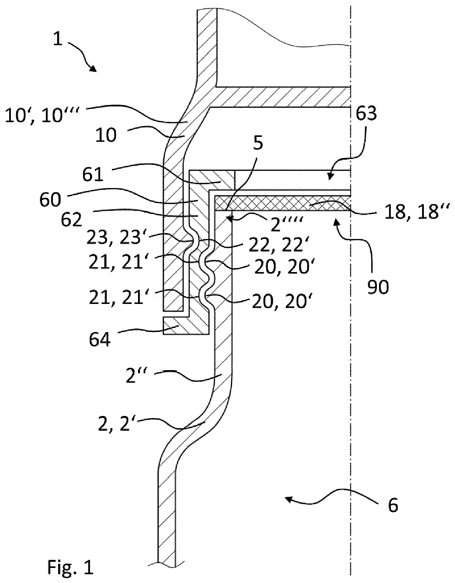

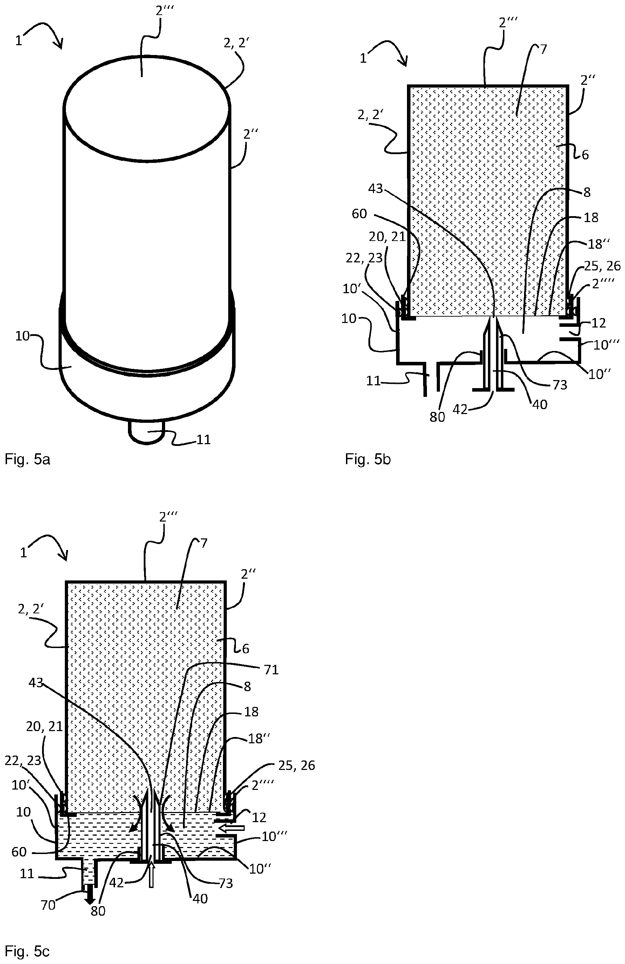

In **Figur 1** ist eine schematische Schnittansicht eines Teils eines Kartuschensystems 1 gemäß einer beispielhaften Ausführungsform der vorliegenden Erfindung dargestellt. Die Kartusche 2 umfasst einen napfförmigen hohlen Hauptkörper 2', mit dessen Hilfe ein Reservoir 6 für eine Getränkesubstanz 7 ausgebildet ist. Napfförmig ausgebildet bedeutet hierbei, dass der Hauptkörper 2' einen Kartuschenboden 2‴ (vgl. Figur 5b) und eine vom Kartuschenboden 2‴ rechtwinklig, insbesondere in Richtung der Kartuschenaufnahme 10, abstehende Kartuschenwandung 2" aufweist. Die Kartuschenwandung 2" ist dabei zumindest teilweise zylinderförmig und umlaufend ausgebildet, während der Kartuschenboden 2‴ in diesem Beispiel eine kreisrunde Ausgestaltung aufweist. Der Hauptkörper 2' der Kartusche 2 oder die Kartusche 2 selbst ist vorzugsweise durch oder zumindest mithilfe einer Glasflasche ausgebildet. Das Reservoir 6 der Kartusche 2 kann mit einer Getränkesubstanz 7 gefüllt werden.

Auf einer dem Kartuschenboden 2‴ in axialer Richtung gegenüberliegenden Seite weist die Kartusche 2 eine Öffnung 90 auf, die mit einem als Dichtfolie 18" ausgebildeten Dichtelement 18 verschlossen ist. Es ist beispielsweise denkbar, dass ein Durchmesser der Öffnung 90 an die Maße eines Aufstechdorns 73 angepasst ist. Die Öffnung 90 kann jedoch auch größer sein als der Aufstechdorn 73. Die Öffnung 90 wird von einem Rand 2ʺʺ der Kartuschenwandung 2" umschlossen. In diesem Mündungsbereich der Kartusche 2 ist eine Zwischenkappe 60 um die Kartusche 2 angebracht. Die Zwischenkappe 60 umfasst einen Bodenbereich 61 und eine Zwischenkappenwandung 62, die rechtwinklig vom Bodenbereich 61 der Zwischenkappe 60 absteht. Hierdurch ist die Zwischenkappe 60 napfförmig ausgebildet. Die Zwischenkappenwandung 62 weist einen größeren Radius auf als der Rand 2ʺʺ der Kartuschenwandung 2", sodass die Zwischenkappenwandung 62 radial außenliegend um die Kartuschenwandung 2" angeordnet ist. Der Bodenbereich 61 umfasst eine Durchgangsöffnung 63, die zur Durchführung eines Aufstechdorns 73 vorgesehen ist. Auf diese Weise kann der Aufstechdorn 73 die Zwischenkappe 60 durchdringen und so bis zum Dichtelement 18 vordringen und dieses perforieren, durchstechen und/oder öffnen. Die Kartusche 2 weist ein erstes Verbindungsmittel 20 auf, das als Außengewinde 20' um die Kartuschenwandung 2" ausgebildet ist und somit eine Gewindemündung für die Kartusche 2 realisiert. Die Zwischenkappe 60 umfasst ein erstes Gegenverbindungsmittel 21, das als Innengewinde 21' ausgebildet ist. Die Zwischenkappe 60 ist über ihr Innengewinde 21' auf das Außengewinde 20' der Kartusche 2 aufgeschraubt. Ein Vorteil der Zwischenkappe 60 liegt darin, dass eine Dichtfolie 18" mithilfe der Zwischenkappe 60 besonders vorteilhaft an der Kartusche 2 angebracht werden kann. Hierfür wird die Dichtfolie 18" - vor dem Aufschrauben der Zwischenkappe 60 auf die Kartusche 2 - an Zwischenkappe 60 befestigt. Insbesondere wird die Dichtfolie 18" hierbei mithilfe eines Wachses und/oder eines Kunststoffs (und/oder mithilfe eines anderen geeigneten Materials) im Inneren der Zwischenkappe 60 an den Bodenbereich 61 geklebt. Die so mit der Zwischenkappe 60 verbundene Dichtfolie 18" wird dann beim Aufschrauben der Zwischenkappen 60 auf die Kartusche 2 über der Öffnung 90 der Kartusche 2 und an einer Stirnfläche 5 der Kartuschenwandung 2" am Rand 2ʺʺ der Kartuschenwandung 2" positioniert und/oder fixiert. Nachfolgend wird die Dichtfolie 18" vorzugsweise durch induktives Fügen bzw. Schweißen mit der Stirnfläche 5 der Kartuschenwandung 2" verbunden. Alternativ ist auch ein Verkleben des Dichtelements 18 an der Stirnfläche 5 denkbar. Somit wird das Reservoir 6 der Kartusche 2 durch das Dichtelement 18 abgedichtet.

Die Zwischenkappe 60 ist somit als Schraubkappe ausgebildet und erfüllt besonders vorteilhaft die Funktion, die Dichtfolie 18" auf der Kartusche 2 zu fixieren, sodass die Dichtfolie 18" nach dem Verschrauben der Schraubkappe auf der Kartusche 2 induktiv mit der Kartusche 2 versiegelt werden kann. Die Kartusche 2 ist dabei bevorzugt eine Glasflasche. Es kommt jedoch auch eine Kunststoffkartusche, beispielsweise eine PET (Polyethylenterephthalat)-Flasche, als Kartusche 2 infrage.

Die mit der Kartusche 2 verbundene Zwischenkappe 60 ist ferner mit der Kartuschenaufnahme 10 verbunden. Die Verbindung ist mithilfe eines zweiten Verbindungsmittels 22 der Zwischenkappe 60 und mithilfe eines zum zweiten Verbindungsmittel 60 komplementären zweiten Gegenverbindungsmittels 23 der Kartuschenaufnahme 10 ausgebildet. Das zweite Verbindungsmittel 22 umfasst hierfür eine Raststicke 22', die mit einem Rastwulst 23' des zweiten Gegenverbindungsmittels 23 zusammenwirkt, sodass die Zwischenkappe 60 und die Kartuschenaufnahme 10 verrastet sind. Die Rastsicke 22' ist dabei an der radial außenliegenden Seite der Zwischenkappenwandung 62 ausgebildet und der Rastwulst an der radial innenliegenden Seite der Seitenwandung 10‴ der Grundstruktur 10' der Kartuschenaufnahme 10. Ferner umfasst die Zwischenkappe 60 optional einen radial nach außen vorstehenden Randbereich 64, der mit der Seitenwandung 10‴ der Grundstruktur 10' der Kartuschenaufnahme 10 überlappt. Der vorstehenden Randbereich 64 kann zur zusätzlichen Fixierung der Zwischenkappe 60 an der Kartuschenaufnahme 10 und/oder zur Abdichtung dienen. Es ist beispielsweise auch denkbar, dass der Randbereich 64 durch Crimpen ausgebildet wird. Alternativ oder zusätzlich zum Randbereich 64 sind viele weitere Geometrien denkbar, um die Kartuschenaufnahme 10 mit der Zwischenkappe 60 zu verbinden.

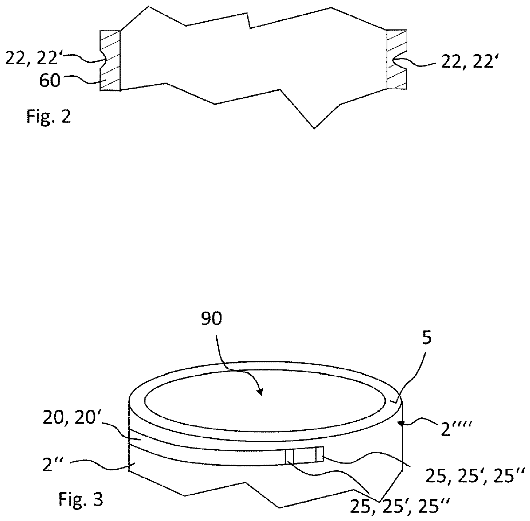

Ferner umfasst die Kartusche 2 ein erstes Verdrehsicherungsmittel 25 und/oder die Zwischenkappe 60 ein weiteres erstes Verdrehsicherungsmittel 26. Mithilfe des ersten und/oder weiteren ersten Verdrehsicherungsmittels 25, 26 ist die relative Orientierung zwischen der Kartusche 2 und der Zwischenkappe 60 - im aufgeschraubten Zustand der Zwischenkappe 60 auf die Kartusche 2 - festgelegt. Hierdurch wird einerseits eine besonders genaue und reproduzierbare Positionierung und Fixierung der Dichtfolie 18" an der Kartusche 2 zum späteren Verbinden der Dichtfolie 18" mit der Kartusche 2 ermöglicht. Andererseits ist es durch die festgelegte Orientierung zwischen Zwischenkappe 60 und Kartusche 2 vorteilhafterweise möglich, dass die Kartusche 2 immer mit der gleichen Orientierung in die Getränkezubereitungsmaschine eingesetzt wird. Somit kann beispielsweise ein an dem Kartuschensystem 1, insbesondere an der Kartusche 2, angebrachtes Informationselement, wie beispielsweise ein QR-Code, im in die Getränkemaschine eingesetzten Zustand des Kartuschensystems 1 vorteilhaft ausgelesen werden. Ferner wird mithilfe des ersten und/oder weiteren ersten Verdrehsicherungsmittels 25, 26 vorzugsweise verhindert, dass sich die Zwischenkappe 60 ungewollt von der Kartusche 2 lösen kann. Das erste Verdrehsicherungsmittel 25 der Kartusche 2 umfasst insbesondere eine vertikale Rippe und/oder eine vertikale Nut. Es ist denkbar, dass das weitere erste Verdrehsicherungsmittel 26 der Zwischenkappe 60 eine komplementäre vertikale Rippe und/oder eine komplementäre vertikale Nut umfasst. Ach andere erste und weitere erste Verdrehsicherungsmittel, wie beispielsweise ein Hinterschnitt oder eine federnde Zunge, sind alternativ oder zusätzlich denkbar. Ein schematisches Beispiel eines ersten Verdrehsicherungsmittels 25 einer Kartusche 2 ist in Figur 3 dargestellt.

Ferner ist es bevorzugt vorgesehen, dass die Zwischenkappe 60 ein zweites Verdrehsicherungsmittel umfasst und/oder dass die Kartuschenaufnahme 10 ein weiteres zweites Verdrehsicherungsmittel umfasst. Durch das zweite Verdrehsicherungsmittel und/oder das weitere zweite Verdrehsicherungsmittel wird eine relative Orientierung zwischen der Zwischenkappe 60 und der Kartuschenaufnahme 10 im verbundenen Zustand der Zwischenkappe 60 und der Kartuschenaufnahme 10 festgelegt. Das zweite Verdrehsicherungsmittel ist mithilfe der Rastsicke 22' des zweiten Verbindungsmittels 22 ausgebildet und das weitere zweite Verdrehsicherungsmittel ist mithilfe des Rastwulstes 23' des zweiten Gegenverbindungsmittels 23 ausgebildet, wie anhand von Figur 2 dargestellt.

In **Figur 2** ist eine schematische Schnittansicht einer Zwischenkappe 60 gemäß einer beispielhaften Ausführungsform der vorliegenden Erfindung dargestellt. Insbesondere ist das zweite Verbindungsmittel 22 der Zwischenkappe 60 dargestellt, das mit dem zweiten Gegenverbindungsmittel 23 der Kartuschenaufnahme 10 zusammenwirkt. Das zweite Verbindungsmittel 22 umfasst eine Rastsicke 22', die die Zwischenkappe 60 vollumfänglich umläuft. Die radiale Ausdehnung der Rastsicke 22", also die Tiefe der Rastsicke 22', ist dabei jedoch um den Umfang der Zwischenkappe 60 vorzugsweise nicht konstant. Insbesondere ist die radiale Ausdehnung der Rastsicke 22' auf einer Seite der Zwischenkappe 60 (rechte Seite in Figur 2) größer als auf der gegenüberliegenden Seite (linke Seite in Figur 2). Die Rastsicke 22' ist somit auf einer Seite der Zwischenkappe 60 tiefer als auf der gegenüberliegenden Seite der Zwischenkappe 60. Hierdurch ist das zweite Verbindungsmittel 22 gleichzeitig als zweites Verdrehsicherungsmittel ausgebildet. Durch die variierende radiale Ausdehnung (also Tiefe) der Rastsicke 22', existiert für die Rastsicke 22' beim Zusammenwirken mit dem Rastwulst 23' der Kartuschenaufnahme 10 eine festgelegte Orientierung. Auch der Rastwulst 23' weist hierfür eine sich komplementär zur radialen Ausdehnung der Rastsicke 22' ändernde radiale Ausdehnung auf (nicht dargestellt). Die Rastmittel 22', 23' umfassen somit in Umfangsrichtung jeweils zumindest einen abgeflachten Bereich. Durch die abgeflachten Bereiche ist eine Verdrehsicherung der Zwischenkappe 60 und der Kartuschenaufnahme 10 ausgebildet. Wenn die Zwischenkappe 60 mit der Kartuschenaufnahme 10 verbunden ist, ist somit vorteilhafterweise eine festgelegte relative Orientierung zwischen der Zwischenkappe 60 und der Kartuschenaufnahme 10 eingestellt.

In **Figur 3** ist eine schematische perspektivische Ansicht eines Mündungsbereichs einer Kartusche 2 gemäß einer beispielhaften Ausführungsform der vorliegenden Erfindung dargestellt. Die Kartusche 2 umfasst ein als Außengewinde 20' ausgebildetes erstes Verbindungsmittel 20. Das Außengewinde 20' weist ein erstes Verdrehsicherungsmittel 25 auf, das insbesondere eine oder mehrere vertikale Nuten 25' und/oder Rippen 25" umfasst. Am Innengewinde 21' der Zwischenkappe 60 ist ein komplementäres weiteres erstes Verdrehsicherungsmittel 26, beispielsweise komplementäre Rippen und/oder Nuten, vorgesehen. Wenn die Zwischenkappe 60 mit der Kartusche 2 verbunden ist, ist somit vorteilhafterweise eine festgelegte relative Orientierung zwischen der Zwischenkappe 60 und der Kartusche 2 ausgebildet. Ferner verhindern das erste und/oder weitere erste Verdrehsicherungsmittel 25, 26 vorteilhafterweise, dass sich die Zwischenkappe 60 ungewollt von der Kartusche 2 abschraubt.

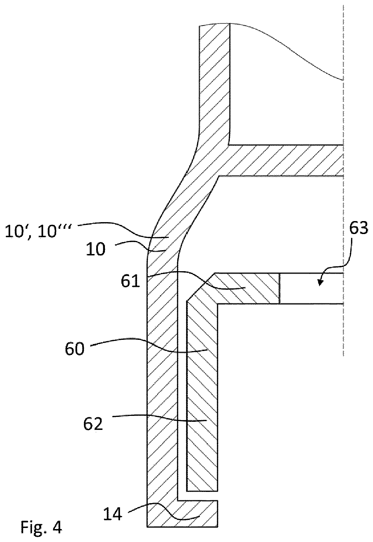

In **Figur 4** ist eine schematische Schnittansicht eines Teils eines Kartuschensystems 1 gemäß einer beispielhaften Ausführungsform der vorliegenden Erfindung dargestellt. In Figur 4 sind dabei lediglich die Zwischenkappe 60 und die Kartuschenaufnahme 10 dargestellt, wobei die Kartusche 2 nicht gezeigt ist. Im Unterschied zu der in der Figur 1 gezeigten Ausführungsform umfasst die Zwischenkappe 60 keinen Randbereich 64. Hingegen umfasst die Kartuschenaufnahme 10 einen radial nach innen von der Seitenwandung 10‴ der Grundstruktur 10' abstehenden Randbereich 14. Der Randbereich 14 erstreckt sich unter die Zwischenkappenwandung 62 und weist einen Überlapp mit der Zwischenkappenwandung 62 auf. Der Randbereich 14 ist vorzugsweise zur Fixierung der Zwischenkappe 60 an der Kartuschenaufnahme 10 und/oder zur Abdichtung vorgesehen. Es ist beispielsweise auch denkbar, dass der Randbereich 14 durch Crimpen ausgebildet wird.

In **Figuren 5a, 5b und 5c** sind eine perspektivische Darstellung, eine schematische Schnittbildansicht und das allgemeine Funktionsprinzip eines Kartuschensystems 1 gemäß einer beispielhaften Ausführungsform der vorliegenden Erfindung dargestellt.

Das abgebildete Kartuschensystem 1 ist dazu vorgesehen, in eine Getränkezubereitungsmaschine (nicht dargestellt) eingesetzt zu werden, um ein Getränk 70 zuzubereiten. Das Kartuschensystem 1 weist hierfür die Kartusche 2, die mit einer Getränkesubstanz 7 gefüllt ist, und eine mit der Kartusche 2 insbesondere über eine Zwischenkappe 60 verbundene Kartuschenaufnahme 10 auf. Innerhalb der Getränkezubereitungsmaschine wird mit Hilfe der Getränkesubstanz 7 und einer zusätzlichen Wasserquelle, im Folgenden als Fluidquelle 41 bezeichnet, ein entsprechendes Getränk 70 erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks 70, notwendig ist, befüllt. Die Getränkesubstanz 7 ist insbesondere ein flüssiges und kohlensäurehaltiges Getränkekonzentrat in Form von Sirup.

Grundsätzlich stehen insbesondere eine Mehrzahl unterschiedlicher Kartuschensysteme 1 zur Verfügung, deren Kartuschen 2 bzw. Reservoirs 6 zur Erzeugung verschiedener Getränke 70 mit unterschiedlichen Getränkesubstanzen 7 befüllt sind. Wenn der Anwender des Systems 1 ein bestimmtes Getränk 70 trinken möchte, braucht er lediglich aus der Mehrzahl der unterschiedlichen Kartuschensysteme 1 dasjenige Kartuschensystem 1, welches die entsprechende Getränkesubstanz 7 zur Erzeugung des gewünschten Getränks 70 enthält, auswählen, in eine Halteeinheit der Getränkezubereitungsmaschine einsetzen und den Getränkeherstellungsprozess an der Getränkezubereitungsmaschine starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch startet, wenn das Einlegen eines neuen Kartuschensystems 1 in die Halteeinheit erkannt wird. In jedem der vorgenannten Fälle wird das gewünschte Getränk 70 sodann automatisch erzeugt, in ein Trinkgefäß geleitet und dem Anwender somit bereitgestellt. Anschließend wird das verbrauchte Kartuschensystem 1 entfernt und entsorgt. Die Getränkezubereitungsmaschine ist nun wieder bereit, um mit einem beliebigen neuen Kartuschensystem 1 befüllt zu werden, um ein weiteres Getränk 70 zu erzeugen.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-) Getränke.

Die Kartusche 2 ist über ein vorzugsweise umlaufendes erstes Verbindungsmittel 20 der Kartusche 2 und ein vorzugsweise umlaufendes erstes Gegenverbindungsmittel 21 der Zwischenkappe 60 mit der Zwischenkappe 60 verbunden, vorzugsweise verschraubt. Die Zwischenkappe 60 wiederum ist mit der Kartuschenaufnahme 10 verbunden. Die Kartuschenaufnahme 10 wird insbesondere nach dem Herstellen des Hauptkörpers 2', nach dem Befüllen der Kartusche 2 mit der Getränkesubstanz 7 und nach und/oder während und/oder vor dem Verschließen des Reservoirs 6 durch Aufbringen des Dichtelements 18 mit der Kartusche 2 und/oder der Zwischenkappe 60 verbunden. Vorzugsweise umfasst das erste Verbindungsmittel 20 und/oder das erste Gegenverbindungsmittel 21 ein ersten Verdrehsicherungsmittel und/oder ein weiteres erstes Verdrehsicherungsmittel, durch die eine Verdrehsicherung für die Kartusche 2 und die Zwischenkappe 60 ausgebildet ist. Denkbar ist, dass die Kartuschenwandung 2" und die Zwischenkappe 60 zusätzlich miteinander verklebt, verschweißt und/oder verpresst werden.

Die Kartuschenaufnahme 10 weist vorzugsweise ein zweites Gegenverbindungsmittel 23 auf, das mit einem komplementären zweiten Verbindungsmittel 22 der Zwischenkappe 60 verbunden ist. Bei dem zweiten Gegenverbindungsmittel 23 und dem zweiten Verbindungsmittel 22 kann es sich beispielsweise um komplementäre Rastsicken und Rastwülste handeln, aber beispielsweise auch um Gewinde. Zusätzlich ist mithilfe des zweiten Gegenverbindungsmittels 23 und/oder des zweiten Verbindungsmittels 22 und/oder mithilfe weiterer Elemente eine Verdrehsicherung zur Sicherung und Festlegung der relativen Orientierung zwischen der Zwischenkappe 60 und der Kartuschenaufnahme 10 ausgebildet.

Die Kartusche 2 ist vorzugsweise derart ausgebildet, dass sie einem Innendruck von bis zu 12 bar, bevorzugt bis zu 10 bar, besonders bevorzugt bis zu 8 bar und ganz besonders bevorzugt bis zu 6 bar ohne Aufzuplatzen standhält (bei einer Temperatur von 20° C und einem Außendruck von 1 bar). Das Reservoir 6 umfasst dabei vorzugsweise ein Volumen zwischen 10 und 500 Milliliter, besonders bevorzugt zwischen 30 und 90 Milliliter und ganz besonders bevorzugt von im Wesentlichen 60 Milliliter.

Die Kartuschenaufnahme 10 weist eine Mischkammer 8 auf, welche während des Getränkeherstellungsprozesses in Fluidverbindung mit dem Reservoir 6 steht, so dass mithilfe einer Kartuschenentladeeinrichtung der Kartuschenaufnahme 10 die Getränkesubstanz 7 zumindest teilweise aus dem Reservoir 6 in die Mischkammer 8 überführt werden kann. Die Kartuschenentladeeinrichtung umfasst zu diesem Zweck eine Druckluftleitung 40. Ein Ende der Druckluftleitung 40 ist mit einem Druckluftanschluss 42 verbunden, der mit einer Druckluftquelle der Getränkezubereitungsmaschine verbunden werden kann, um Druckluft in die Druckluftleitung 40 einzuleiten, während das andere Ende in einen Druckluftauslass mündet, der in Richtung des Reservoirs 6 geöffnet ist und Druckluft in das Reservoir 6 einleitet. Das Einleiten der Druckluft bewirkt, dass die Getränkesubstanz 7 in die Mischkammer 8 gedrückt wird. Es ist denkbar, dass sich die Druckluftleitung 40 im Inneren des Aufstechdorns 73 von dem äußeren Druckluftanschluss 42 zum Anschluss an eine Druckluftquelle bis zu einem Druckluftauslass 43 im Bereich einer Spitze des Aufstechdorns erstreckt.

In die Mischkammer 8 mündet ferner eine Fluidzuführung 12 der Kartuschenaufnahme 10, welche durch eine Fluidquelle der Getränkezubereitungsmaschine gespeist wird. Denkbar ist, dass die Fluidzuführung eine Schnellkupplung aufweist, mit welcher die Fluidzuführung 12 an die Fluidquelle der Getränkezubereitungsmaschine angeschlossen werden kann. Die Schnellkupplung kann beispielsweise derart ausgebildet sein, dass beim Einsetzen des Kartuschensystems 1 in die Halteeinheit automatisch eine Fluidverbindung zwischen der Fluidquelle und der Mischkammer 8 über die Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung 12 in die Mischkammer 8. Ferner gelangt während des Getränkeherstellungsprozesses Getränkesubstanz 7 von dem Reservoir 6 in die Mischkammer 8, wie vorstehend beschrieben. Durch Vermischung der Getränkesubstanz 7 mit dem Fluid in der Mischkammer 8 bildet sich das Getränk 70, welches die Mischkammer 8 sodann durch einen Getränkeauslauf 11 verlässt.

Die Kartuschenaufnahme 10 weist den Getränkeauslauf 11 auf, durch welchen das innerhalb der Mischkammer 8 erzeugte Getränk 70 die Mischkammer 8 verlässt und insbesondere direkt in das Trinkgefäß (nicht abgebildet) geleitet wird, d.h. ohne, dass Teile der Getränkezubereitungsmaschine in Kontakt mit dem Getränk 70 gelangen. Auf diese Weise wird Rücckontamination der Getränkezubereitungsmaschine verhindert. Das Trinkgefäß wird insbesondere direkt unterhalb des Getränkeauslaufs 11 angeordnet.

Nach Beendigung des Getränkeherstellungsprozesses wird das Kartuschensystem 1 aus der Halteeinheit entnommen, so dass die Getränkeherstellungsmaschine mit einem neuen und unverbrauchten Kartuschensystem 1 bestückt werden kann. Die Kartuschenaufnahme 10 kann optional wiederverwendet werden, indem es von der benutzten Kartusche 2 und der Zwischenkappe 60 durch Lösen der Rastverbindung abgetrennt und auf eine neue Kartusche 2 und/oder Zwischenkappe 60 geclipst wird. Es ist denkbar, dass auch die Kartusche 2 wiederverwendet werden kann. Insbesondere ist es denkbar, dass die Kartusche 2 mit einer neuen Getränkesubstanz 7 befüllt und mit einem Dichtelement 18 abgedichtet werden kann. Es ist ferner denkbar, dass die Zwischenkappe 60 wiederverwendet werden kann, insbesondere um mithilfe der Zwischenkappe 60 eine neue Dichtfolie 18" an einer neuen Kartusche 2 anzubringen.

Zur Herstellung der Fluidverbindung zwischen dem Reservoir 6 und der Mischkammer 8 weist die Kartuschenaufnahme 10 eine Dornführung 80 auf, in welcher ein Aufstechdorn 73 verschiebbar gelagert ist. Das Dichtelement 18 wird durch eine Überführung des verschiebbaren Aufstechdorns 73 zwischen einer eingefahrenen Position, in welcher der Aufstechdorn 73 von dem Dichtelement 18 beabstandet ist (vgl. Figur 5b), und einer ausgefahrenen Position, in welcher der Aufstechdorn 73 das Dichtelement 18 durchsticht (vgl. Figur 5c) und bis in das Reservoir 6 ragt, perforiert. Beim Überführen aus der eingefahrenen Position in die ausgefahrene Position durchläuft der Aufstechdorn 73 die Durchgangsöffnung 63 der Zwischenkappe 60 bevor der Aufstechdorn 73 das Dichtelement 18 durchsticht.

Die Außenwandung des Aufstechdorns 73 ist mit der Mehrzahl von Seitenkanälen 71 zum Leiten der Getränkesubstanz 7 vom Reservoir 6 in Richtung der Mischkammer 8, wenn das Dichtelement 18 durchstochen ist, versehen. Die Seitenkanäle 71 sind in Form von parallel zueinander verlaufenden einseitig offenen Nuten ausgebildet. Nach dem Durchstechen des Dichtelements 18 gelangen die Seitenkanäle 71 in Fluidverbindung mit dem Reservoir 6, so dass die Getränkesubstanz 7 die Ränder des durchstochenen Dichtelements 18 in Richtung der Mischkammer 8 umfließen kann.

Der Querschnitt der Seitenkanäle 71 und/oder die Anzahl der Seitenkanäle 71 ist dabei vorzugsweise an die Viskosität der Getränkesubstanz 7 angepasst ist, so dass die Seitenkanäle 71 den Fluss der Getränkesubstanz 7 in Richtung Mischkammer 8 kontrollieren bzw. begrenzen. Bei einer hohen Viskosität werden mehrere Seitenkanäle 71 und/oder Seitenkanäle 71 mit größerem Querschnitt verwendet, während bei einer niedrigeren Viskosität weniger Seitenkanäle 71 und/oder Seitenkanäle 71 mit geringerem Querschnitt vorgesehen sind.

In den Aufstechdorn 73 ist ferner die Druckluftleitung 40 integriert, welche als Kartuschenentladeeinrichtung fungiert. Die Druckluftleitung 40 mündet am Ende des Aufstechdorns 73 in das Reservoir 6, wenn sich der Aufstechdorn 73 in der ausgefahrenen Position befindet.

An einer dem Reservoir 6 insbesondere abgewandten Seite des Aufstechdorns 73 ist der Druckluftanschluss 42 ausgebildet, der somit von außerhalb der Kartuschenaufnahme 10 zugänglich und an die Druckluftquelle der Getränkezubereitungsmaschine anschließbar ist.

Vorzugsweise wird der Aufstechdorn 73 beim oder nach dem Einsetzen des Kartuschensystems 10 in die Getränkezubereitungsmaschine oder nach dem Starten des Getränkeherstellungsprozesses von der eingefahrenen Position in die ausgefahrene Position überführt, vorzugsweise durch ein feststehendes Auslöseelement der Halteeinheit, gegen welches der Aufstechdorn 73 gedrückt wird. Der Aufstechdorn 71 ist vorzugsweise als Kunststoffteil und besonders bevorzugt als Kunststoff-Spritzgussteil ausgebildet.

Es ist vorzugsweise denkbar, dass sowohl die Fluidquelle als auch die Druckluftquelle direkt an die Fluidzuführung 12 bzw. den Druckluftanschluss 42 angekoppelt werden, sobald das Kartuschensystem 1 in die Getränkezubereitungsmaschine eingesetzt wird oder ein Getränkeherstellungsprozess gestartet wird und insbesondere bevor das Dichtelement 18 durchstochen wird. Auf diese Weise wird eine Rückkontamination in Richtung der Getränkezubereitungsmaschine wirksam vermieden, weil die Fluidzuführung 12 und die Kartuschenentladeeinrichtung insbesondere sofort beim Einsetzen des Kartuschensystems 1 unter Überdruck stehen und somit verhindert wird, dass Getränkesubstanz 7 in Richtung der Fluidquelle bzw. Druckluftquelle wandert. Die Getränkesubstanz 7 kann sich ausgehend vom Reservoir 6 somit lediglich in Richtung der Mischkammer 8 bewegen (siehe Figur 5c), sobald das Dichtelement 18 geöffnet wird.

Die Kartuschenaufnahme 10 umfasst eine Grundstruktur 10' mit einer napfförmigen Ausgestaltung. Die offene Seite dieser napfförmigen Ausgestaltung zeigt in Richtung Kartusche 2 und nimmt zumindest teilweise die Kartusche 2 und die Zwischenkappe 60 auf. Auf einer gegenüberliegenden Bodenseite 10" weist die Grundstruktur 10' die Getränkeauslassöffnung 11 und die nach außen offene Dornführung 80 auf. An einer Seitenwandung 10‴ der Grundstruktur 10' ist die Fluidzuführung 12 ausgebildet. Die Grundstruktur 10' ist insbesondere als Kunststoffteil und besonders bevorzugt als Kunststoff-Spritzgussteil ausgebildet.

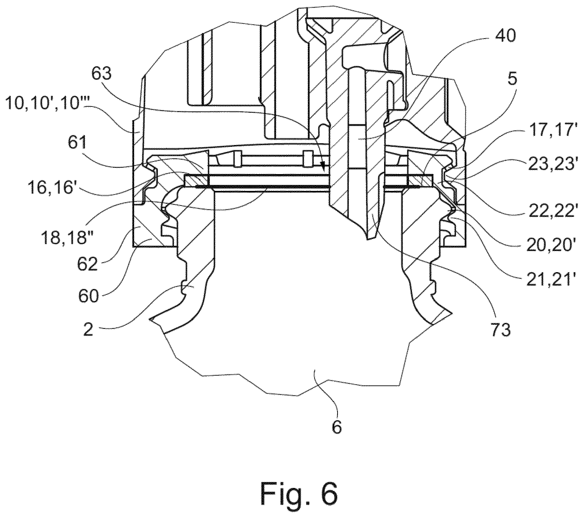

In **Figur 6** ist eine schematische Schnittansicht eines Teils eines Kartuschensystems 1 gemäß einer beispielhaften Ausführungsform der vorliegenden Erfindung dargestellt. Die Kartusche 2 umfasst ein Reservoir 6 für eine Getränkesubstanz 7. Der Hauptkörper 2' der Kartusche 2 oder die Kartusche 2 selbst ist insbesondere aus oder mithilfe von Glas gefertigt. Im Mündungsbereich der Kartusche 2 ist eine Zwischenkappe 60 an der Kartusche 2 angebracht. Die Zwischenkappe 60 umfasst einen Bodenbereich 61 und eine Zwischenkappenwandung 62, die von dem Bodenbereich 61 ausgeht und die Kartuschenwandung im Mündungsbereich der Kartusche 2 umgibt. Der Bodenbereich 61 umfasst eine Durchgangsöffnung 63, die zur Durchführung eines Aufstechdorns 73 vorgesehen ist. Die Durchgangsöffnung 63 kann unterschiedliche Größen und/oder Formen aufweisen. Beispielsweise sind eine kreisrunde Durchgangsöffnung 63 oder eine eckige oder ovale Durchgangsöffnung 63 denkbar. Es ist möglich, dass die Durchgangsöffnung 63 an die Maße des Aufstechdorns 73 angepasst ist und/oder diesen beim Durchführen des Aufstechdorns 73 umschließt. Der Aufstechdorn 73 kann durch die Durchgangsöffnung 63 geführt werden und so bis zum Dichtelement 18 vordringen und dieses perforieren, durchstechen und/oder öffnen. Das Dichtelement 18 ist insbesondere als Dichtfolie 18" ausgebildet. In der in der Figur 6 gezeigten Darstellung befindet sich der Aufstechdorn 73 in einer ausgefahrenen Position, in der der Aufstechdorn 73 das Dichtelement 18 durchstochen hat und bis in das Reservoir 6 ragt. Die Kartusche 2 weist ein erstes Verbindungsmittel 20 auf, das als Außengewinde 20' an der Kartuschenwandung 2" ausgebildet ist. Die Zwischenkappe 60 umfasst ein erstes Gegenverbindungsmittel 21, das als Innengewinde 21' ausgebildet ist. Die Zwischenkappe 60 ist über ihr Innengewinde 21' auf das Außengewinde 20' der Kartusche 2 aufgeschraubt. Die Zwischenkappe 60 ist somit als Schraubkappe ausgebildet. Zwischen dem Bodenbereich 61 der Zwischenkappe 60 und der Stirnfläche 5 der Kartusche 2 ist ein Abdichtungsmittel 16 in Form eines umlaufenden Dichtrings 16' ausgebildet. Durch den Dichtring 16' ist der Übergang zwischen der Kartusche 2 und der Zwischenkappe 60 abgedichtet, so dass keine Flüssigkeit durch diesen Übergang aus dem Kartuschensystem 1 austritt. Ferner dient der Dichtring 16' vorteilhaft zum Ausgleich bzw. zur Kompensation von Fertigungstoleranzen der Kartusche 2 und/oder der Zwischenkappe 60. Ein weiteres Abdichtungsmittel 17 ist zwischen der Zwischenkappe 60 und der Kartuschenaufnahme 10 angeordnet und dichtet den Übergang zwischen der Zwischenkappe 60 und der Kartuschenaufnahme 10 ab, so dass keine Flüssigkeit aus dem Kartuschensystem 1 durch diesen Übergang zwischen der Zwischenkappe 60 und der Kartuschenaufnahme 10 austreten kann. Ferner dient das weitere Abdichtungsmittel 17 vorzugsweise als Verdrehsicherung (Friktion) zwischen der Zwischenkappe 60 und der Kartuschenaufnahme 10, insbesondere für den Fall, dass sowohl die Zwischenkappe 60 als auch die Kartuschenaufnahme 10 rotationssymmetrisch ausgebildet sind und/oder keine Abflachung zur Verdrehsicherung aufweisen. Es ist ferner optional denkbar, eine Verzahnung zwischen den Hartkomponenten (also insbesondere der Zwischenkappe und/oder der Kartuschenaufnahme) und den Weichkomponenten (also insbesondere dem weiteren Abdichtungsmittel 17) auszubilden, um einen besonders vorteilhaften Schutz gegen ein unerwünschtes Verdrehen der Zwischenkappe 60 und der Kartuschenaufnahme 10 relativ zueinander zu erreichen. Das weitere Abdichtungsmittel 17 kann beispielsweise als Zweikomponenten-KunststoffSpritzteil gespritzt sein oder manuell als Zusatzteil eingelegt werden und kann insbesondere in der Nut an beliebiger Stelle angeordnet sein. In der gezeigten Ausführungsform ist das weitere Abdichtungsmittel 17 als umlaufender Dichtring 17' ausgebildet. Das weitere Abdichtungsmittel 17 ist insbesondere im Bereich des zweiten Verbindungsmittels 22 und des zweiten Gegenverbindungsmittels 23 angeordnet. Das zweite Verbindungsmittel 22 kann beispielsweise als Rastsicke 22' und das zweite Gegenverbindungsmittel 23 als Rastwulst 23' ausgebildet sein. Alternativ kann das zweite Verbindungsmittel 22 beispielsweise als Rastwulst und das zweite Gegenverbindungsmittel 23 als Rastsicke ausgebildet sein. Die Zwischenkappe 60 und die Kartuschenaufnahme 10 sind über das zweite Verbindungsmittel 22 und das zweite Gegenverbindungsmittel 23 aneinander befestigt.

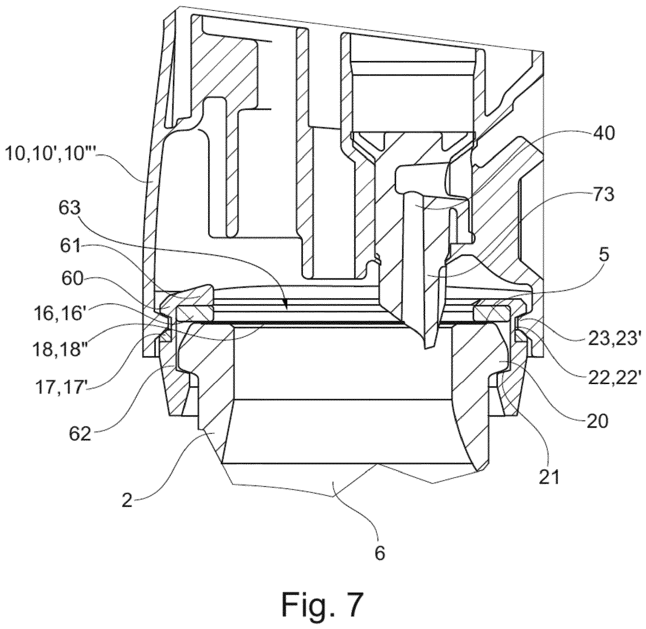

In **Figur 7** ist eine schematische Schnittansicht eines Teils eines Kartuschensystems 1 gemäß einer beispielhaften Ausführungsform der vorliegenden Erfindung dargestellt. Die Ausführungsform gemäß der Figur 7 ähnelt der in der Figur 6 dargestellten Ausführungsform. Das Dichtelement 18 ist als Dichtfolie 18" ausgebildet und die Kartusche 2 ist vorzugsweise teilweise oder vollständig aus Glas gefertigt. Ein als Dichtring 16' ausgebildetes Abdichtungsmittel 16 ist zwischen der Stirnfläche 5 der Kartusche 2 und dem Bodenbereich 61 der Zwischenkappe 60 angeordnet. Ferner ist ein als Dichtring 17' ausgebildetes weiteres Abdichtungsmittel 17 zwischen dem zweiten Verbindungsmittel 22 und dem zweiten Gegenverbindungsmittel 23 zur Abdichtung des Übergangs zwischen der Zwischenkappe 60 und der Kartuschenaufnahme 10 angeordnet. Das zweite Verbindungsmittel 22 ist als Rastsicke 22' in der Zwischenkappe 60 ausgebildet und das zweite Gegenverbindungsmittel 23 ist als Rastwulst 23' der Kartuschenaufnahme 10 ausgebildet. Im Unterschied zu der in der Figur 6 dargestellten Ausführungsform ist die Zwischenkappe 60 mithilfe ihres ersten Gegenverbindungsmittels 21 auf die Kartusche 2 aufgerastet und/oder aufgeschnappt und insbesondere nicht geschraubt. Die Kartusche 2 weist hierfür beispielsweise ein erstes Verbindungsmittel 20 auf, das als Flanschbereich an der Kartuschenmündung bzw. als Rastwulst ausgebildet ist. Für das Abdichtungsmittel 16 und das weitere Abdichtungsmittel 17 können dabei die Ausgestaltungen, Funktionen und Vorteile Anwendung finden, die bereits im Zusammenhang mit der Figur 6 beschrieben worden sind.

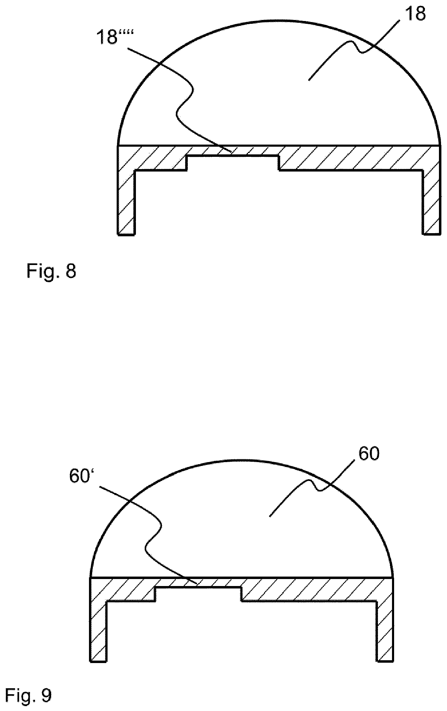

In **Figur 8** ist eine schematische perspektivische Schnittansicht eines Dichtelements 18 gemäß einer beispielhaften Ausführungsform der vorliegenden Erfindung gezeigt. Das Dichtelement 18 ist als Kunststoffkappe ausgebildet und weist einen oder mehrere Kunststoffe auf. Die Kunststoffkappe kann beispielsweise mithilfe von Spritzgießen ausgebildet werden. Es ist dabei denkbar, dass die Kunststoffkappe als Crimpkappe, Rastkappe oder Schraubkappe ausgebildet ist, also beispielswiese auf eine Kartusche gecrimpt, gerastet oder geschraubt werden kann. Das Dichtelement 18, insbesondere die Kunststoffkappe, weist eine Schwächung 18ʺʺ zur Durchführung des Aufstechdorns 73 auf. Die Schwächung 18ʺʺ ist insbesondere ein Bereich der Kunststoffkappe, der im Vergleich zu den angrenzenden Bereichen der Kunststoffkappe eine verringerte Dicke aufweist. Die Schwächung 18ʺʺ wird vorzugsweise bei der Ausbildung der Kunststoffkappe, beispielsweise beim Spritzgießen, als verdünnter Bereich der Kunststoffkappe erzeugt, sodass keine weitere Nachbehandlung der Kunststoffkappe zur Erzeugung der Schwächung nötig ist. Die in Figur 8 gezeigte Kunststoffkappe kann als Dichtelement 18 beispielsweise mit den vorhergehend beschriebenen unterschiedlichen Ausführungsformen von Zwischenkappen 60 kombiniert werden. Die in Figur 8 gezeigte Kunststoffkappe kann als Dichtelement 18 beispielsweise mit den vorhergehend beschriebenen unterschiedlichen Ausführungsformen von Abdichtungsmitteln 16 und weiteren Abdichtungsmitteln 17 kombiniert werden. Beispielsweise ist eine Anwendung zusammen mit einem ringförmigen oder vollflächigen Abdichtungsmittel 16 denkbar, welches als separates Einlegeteil oder mithilfe eines Zweikomponenten-Spritzgießens als Teil des Dichtelements 18 oder als Teil der Zwischenkappe 60 ausgebildet ist. Beispielsweise ist eine Anwendung zusammen mit einem weiteren Abdichtungsmittel 17 denkbar, welches als separates Einlegeteil oder mithilfe eines Zweikomponenten-Spritzgießens als Teil der Zwischenkappe 60 oder als Teil der Kartuschenaufnahme 10 ausgebildet ist.

In **Figur 9** ist eine schematische perspektivische Schnittansicht einer Zwischenkappe 60 gemäß einer beispielhaften Ausführungsform der vorliegenden Erfindung gezeigt. Die Zwischenkappe 60 ist dabei insbesondere als Kunststoffkappe mit einer Schwächung 60' und/oder Vorstanzung ausgebildet. In diesem Fall ist es möglich, dass die Zwischenkappe 60 in dem in der Figur 9 dargestellten Ausgangszustand der Zwischenkappe 60 keine Durchgangsöffnung 63 aufweist. Die Durchgangsöffnung 63 wird dadurch erzeugt, dass der Aufstechdorn 73 den Bodenbereich 61 der Zwischenkappe 60 im Bereich der Schwächung 60' öffnet. Die Durchgangsöffnung 63 wird dementsprechend durch die Bewegung des Aufstechdorns 73 erzeugt, der die Zwischenkappe 60 im Bereich ihrer Schwächung 60' durchstößt und/oder durchdringt, insbesondere bevor der Aufstechdorn 73 das Dichtelement 18 öffnet. Die in Figur 9 gezeigte Kunststoffkappe kann als Zwischenkappe 60 beispielsweise mit den vorhergehend beschriebenen unterschiedlichen Ausführungsformen von Kartuschensystemen 1 kombiniert werden. Die in Figur 9 gezeigte Kunststoffkappe kann als Zwischenkappe 60 beispielsweise mit den vorhergehend beschriebenen unterschiedlichen Ausführungsformen von Abdichtungsmitteln 16 und weiteren Abdichtungsmitteln 17 kombiniert werden. Beispielsweise ist eine Anwendung zusammen mit einem ringförmigen oder vollflächigen Abdichtungsmittel 16 denkbar, welches als separates Einlegeteil oder mithilfe eines Zweikomponenten-Spritzgießens als Teil des Dichtelements 18 oder als Teil der Zwischenkappe 60 ausgebildet ist. Beispielsweise ist eine Anwendung zusammen mit einem weiteren Abdichtungsmittel 17 denkbar, welches als separates Einlegeteil oder mithilfe eines Zweikomponenten-Spritzgießens als Teil der Zwischenkappe 60 oder als Teil der Kartuschenaufnahme 10 ausgebildet ist.

### Bezugszeichenliste

- 1: Kartuschensystem
- 2: Kartusche
- 2': Hauptkörper
- 2": Kartuschenwandung
- 2‴: Kartuschenboden
- 2ʺʺ: Rand der Kartuschenwandung
- 5: Stirnfläche
- 6: Reservoir
- 7: Getränkesubstanz
- 8: Mischkammer
- 10: Kartuschenaufnahme
- 10': Grundstruktur
- 10": Bodenseite
- 10‴: Seitenwandung der Grundstruktur
- 11: Getränkeauslauf
- 12: Fluidzuführung
- 14: Randbereich der Seitenwandung der Grundstruktur
- 16: Abdichtungsmittel
- 16': Dichtring
- 17: weiteres Abdichtungsmittel
- 17': Dichtring
- 18: Dichtelement
- 18": Dichtfolie
- 18ʺʺ: Schwächung des Dichtelements
- 20: erstes Verbindungsmittel
- 20': Außengewinde
- 21: erstes Gegenverbindungsmittel
- 21': Innengewinde
- 22: zweites Verbindungsmittel
- 22': Rastsicke
- 23: zweites Gegenverbindungsmittel
- 23': Rastwulst
- 25: erstes Verdrehsicherungsmittel
- 25': Nut
- 25": Rippe
- 26: weiteres erstes Verdrehsicherungsmittel
- 40: Druckluftleitung
- 42: Druckluftanschluss
- 43: Druckluftauslass
- 60: Zwischenkappe
- 60': Schwächung der Zwischenkappe
- 61: Bodenbereich der Zwischenkappe
- 62: Zwischenkappenwandung
- 63: Durchgangsöffnung
- 64: Randbereich der Zwischenkappe
- 70: Getränk
- 71: Seitenkanal
- 73: Aufstechdorn
- 80: Dornführung
- 90: Öffnung

## Patentansprüche

1. Kartuschensystem (1) zur Herstellung eines Getränks (70), wobei das Kartuschensystem (1) in eine Getränkezubereitungsmaschine einsetzbar ist, wobei das Kartuschensystem (1) eine Kartusche (2), die ein mit einer Getränkesubstanz (7) gefülltes Reservoir (6) umfasst, und eine Kartuschenaufnahme (10) umfasst, wobei die Kartuschenaufnahme (10) eine mit dem Reservoir (6) in Fluidverbindung bringbare Mischkammer (8) und eine in die Mischkammer (8) mündende Fluidzuführung (12) aufweist, **dadurch gekennzeichnet, dass** das Kartuschensystem (1) eine Zwischenkappe (60) umfasst, wobei die Kartusche (2) ein erstes Verbindungsmittel (20) aufweist, wobei die Zwischenkappe (60) ein zum ersten Verbindungsmittel (20) komplementäres erstes Gegenverbindungsmittel (21) aufweist, wobei das erste Gegenverbindungsmittel (21) mit dem ersten Verbindungsmittel (20) verbunden ist.

2. Kartuschensystem (1) nach Anspruch 1, wobei das Kartuschensystem (1) ein Dichtelement (18) umfasst, wobei eine Öffnung (90) der Kartusche (2), insbesondere in einem Ausgangszustand des Kartuschensystems (1), durch das Dichtelement (18) verschlossen ist.

3. Kartuschensystem (1) nach einem der vorhergehenden Ansprüche, wobei das erste Verbindungsmittel (20) ein Außengewinde (20`) umfasst, wobei das erste Gegenverbindungsmittel (21) ein Innengewinde (21') umfasst, wobei die Kartusche (2) und die Zwischenkappe (60) insbesondere durch das Außengewinde (20') der Kartusche (2) und das Innengewinde (21') der Zwischenkappe (2) miteinander verbunden sind.

4. Kartuschensystem (1) nach einem der vorhergehenden Ansprüche, wobei die Kartusche (2) ein erstes Verdrehsicherungsmittel (25), eine insbesondere vertikale Rippe (25") und/oder eine insbesondere vertikale Nut (25'), aufweist und/oder wobei die Zwischenkappe (60) ein weiteres erstes Verdrehsicherungsmittel (26), insbesondere vertikale Rippe und/oder eine insbesondere vertikale Nut, aufweist, wobei eine relative Orientierung zwischen der Kartusche (2) und der Zwischenkappe (60) mithilfe des ersten Verdrehsicherungsmittels (25) und/oder des weiteren ersten Verdrehsicherungsmittels (26) festgelegt ist.

5. Kartuschensystem (1) nach einem der vorhergehenden Ansprüche, wobei die Zwischenkappe (60) einen Bodenbereich (61) und eine Zwischenkappenwandung (62) aufweist, wobei sich die Zwischenkappenwandung (62) insbesondere senkrecht von dem Bodenbereich (61) ausgehend und umlaufend um den Bodenbereich (61) erstreckt, wobei die Zwischenkappe (60) bevorzugt napfförmig ausgebildet ist.

6. Kartuschensystem (1) nach Anspruch 5, wobei der Bodenbereich (61) der Zwischenkappe (60) eine Durchgangsöffnung (63) aufweist, insbesondere zur Durchführung eines Aufstechdorns (73) durch die Durchgangsöffnung (63) des Bodenbereichs (61).

7. Kartuschensystem (1) nach einem der Ansprüche 2 bis 6, wobei das Dichtelement (18) zwischen einem Rand (2"") einer Kartuschenwandung (2") der Kartusche (2) und dem Bodenbereich (61) der Zwischenkappe (60) angeordnet ist.

8. Kartuschensystem (1) nach einem der Ansprüche 2 bis 7, wobei das Dichtelement (18) eine Dichtfolie (18") umfasst.

9. Kartuschensystem (1) nach einem der vorhergehenden Ansprüche, wobei die Zwischenkappe (60) mit der Kartuschenaufnahme (10) verbunden ist.

10. Kartuschensystem (1) nach einem der vorhergehenden Ansprüche, wobei Zwischenkappe (60) ein zweites Verbindungsmittel (22) aufweist, und/oder wobei die Kartuschenaufnahme (10) ein zweites Gegenverbindungsmittel (23) aufweist, wobei das zweite Gegenverbindungsmittel (23) bevorzugt form-, kraft- und/oder stoffschlüssig mit dem zweiten Verbindungsmittel (22) verbunden ist.

11. Kartuschensystem (1) nach einem der vorhergehenden Ansprüche, wobei die Kartuschenaufnahme (10) eine Grundstruktur (10`) aufweist, welche zumindest teilweise und insbesondere vollständig aus Kunststoff gefertigt ist, wobei die Grundstruktur (10') eine napfförmige Ausgestaltung aufweist, deren offene Seite in Richtung der Kartusche (2) ausgerichtet ist, wobei an einer der Kartusche (2) gegenüberliegenden Bodenseite (10") eine Getränkeauslassöffnung (11) und eine nach außen offene Dornführung (80) ausgebildet sind und wobei an der Bodenseite (10") oder einer Seitenwandung (10‴) der Grundstruktur (10') eine Fluidzuführung (12) ausgebildet ist.

12. Kartuschensystem (1) nach Anspruch 11, wobei innerhalb der Dornführung (80) ein verschiebbar gelagerten Aufstechdorn (73) angeordnet ist, wobei der Aufstechdorn (73) zwischen einer eingefahrenen Position, in welcher der Aufstechdorn (73) von dem Dichtelement (18) beabstandet ist, und einer ausgefahrenen Position, in welcher der Aufstechdorn (73) das Dichtelement (18) durchsticht und bis in das Reservoir (6) ragt, verschiebbar ist, wobei insbesondere eine Außenwandung des Aufstechdorns (73) wenigstens einen Seitenkanal (71) zum Leiten der Getränkesubstanz (7) in Richtung der Mischkammer (8), wenn das Dichtelement (18) durchstochen ist, aufweist.

13. Kartuschensystem (1) nach Anspruch 12, wobei der Aufstechdorn (73) eine integrierte Druckluftleitung (40) aufweist, wobei sich die Druckluftleitung (40) im Inneren des Aufstechdorns (73) von einem äußeren Druckluftanschluss (42) zum Anschluss an eine Druckluftquelle bis zu einem Druckluftauslass (43) im Bereich einer Spitze des Aufstechdorns erstreckt und zum Einblasen von Druckluft in das Reservoir (6) ausgebildet ist.

14. Getränkezubereitungsmaschine, umfassend ein Kartuschensystem (1) nach einem der vorhergehenden Ansprüche.

15. Verfahren zur Herstellung eines Kartuschensystems (1) nach einem der Ansprüche 1 bis14,
-- wobei in einem ersten Verfahrensschritt die Kartusche (2) und die Zwischenkappe (60) bereitgestellt werden,
-- wobei in einem zweiten Verfahrensschritt, nach dem ersten Verfahrensschritt, die Kartusche (2) und die Zwischenkappe (60) durch das erste Verbindungsmittel (20) der Kartusche (2) und das erste Gegenverbindungsmittel (21) der Zwischenkappe (60) miteinander verbunden werden.

## Claims

1. Cartridge system (1) for making a beverage (70), wherein the cartridge system (1) can be inserted into a beverage preparation machine, wherein the cartridge system (1) comprises a cartridge (2), which comprises a reservoir (6) filled with a beverage substance (7), and a cartridge receptacle (10), wherein the cartridge receptacle (10) has a mixing chamber (8), which can be brought into fluidic connection with the reservoir (6), and a fluid feed (12) opening into the mixing chamber (8), **characterized in that** the cartridge system comprises an intermediate cap (60), wherein the cartridge (2) has a first connecting means (20), wherein the intermediate cap (60) has a first mating connecting means (21) complementary to the first connecting means (20), wherein the first mating connecting means (21) is connected to the first connecting means (20).

2. Cartridge system (1) according to Claim 1, wherein the cartridge system (1) comprises a sealing element (18), wherein an opening (90) of the cartridge (2) is closed by the sealing element (18), in particular in an initial state of the cartridge system (1).

3. Cartridge system (1) according to either of the preceding claims, wherein the first connecting means (20) comprises an external thread (20'), wherein the first mating connecting means (21) comprises an internal thread (21'), wherein the cartridge (2) and the intermediate cap (60) are connected to one another in particular by the external thread (20`) of the cartridge (2) and the internal thread (21`) of the intermediate cap (2).

4. Cartridge system (1) according to any of the preceding claims, wherein the cartridge (2) has a first twist prevention means (25), an, in particular vertical, rib (25") and/or an, in particular vertical, groove (25`), and/or wherein the intermediate cap (60) has a further first twist prevention means (26), an, in particular vertical, rib and/or an, in particular vertical, groove, wherein a relative orientation between the cartridge (2) and the intermediate cap (60) is defined with the aid of the first twist prevention means (25) and/or the further first twist prevention means (26) .

5. Cartridge system (1) according to any of the preceding claims, wherein the intermediate cap (60) has a base region (61) and an intermediate cap wall (62), wherein the intermediate cap wall (62) extends in particular perpendicularly from the base region (61) and circumferentially around the base region (61), wherein the intermediate cap (60) is preferably of cup-shaped design.

6. Cartridge system (1) according to Claim 5, wherein the base region (61) of the intermediate cap (60) has a through-opening (63), in particular for passing a piercing spike (73) through the through-opening (63) of the base region (61).

7. Cartridge system (1) according to any of Claims 2 to 6, wherein the sealing element (18) is arranged between an edge (2ʺʺ) of a cartridge wall (2") of the cartridge (2) and the base region (61) of the intermediate cap (60).

8. Cartridge system (1) according to any of Claims 2 to 7, wherein the sealing element (18) comprises a sealing film (18").

9. Cartridge system (1) according to any of the preceding claims, wherein the intermediate cap (60) is connected to the cartridge receptacle (10).

10. Cartridge system (1) according to any of the preceding claims, wherein the intermediate cap (60) has a second connecting means (22), and/or wherein the cartridge receptacle (10) has a second mating connecting means (23), wherein the second mating connecting means (23) is preferably connected to the second connecting means (22) positively, nonpositively and/or materially.

11. Cartridge system (1) according to any of the preceding claims, wherein the cartridge receptacle (10) has a basic structure (10') which is produced at least partially and, in particular, completely from plastic, wherein the basic structure (10') has a cup-shaped configuration, the open side of which is oriented in the direction of the cartridge (2), wherein a beverage outlet opening (11) and an outwardly open spike guide (80) are formed on a bottom side (10"), which is situated opposite the cartridge (2), and wherein a fluid feed (12) is formed on the bottom side (10") or a side wall (10‴) of the basic structure (10').

12. Cartridge system (1) according to Claim 11, wherein a displaceably mounted piercing spike (73) is arranged within the spike guide (80), wherein the piercing spike (73) is displaceable between a retracted position, in which the piercing spike (73) is away from the sealing element (18), and an extended position, in which the piercing spike (73) pierces the sealing element (18) and projects into the reservoir (6), wherein in particular an outer wall of the piercing spike (73) has at least one lateral channel (71) for conveying the beverage substance (7) in the direction of the mixing chamber (8) when the sealing element (18) has been pierced.

13. Cartridge system (1) according to Claim 12, wherein the piercing spike (73) has an integrated compressed-air line (40), wherein the compressed-air line (40) extends in the interior of the piercing spike (73) from an outer compressed-air connection (42) for connection to a compressed-air source to a compressed-air outlet (43) in the region of a tip of the piercing spike and is designed for blowing compressed air into the reservoir (6).

14. Beverage preparation machine, comprising a cartridge system (1) according to any of the preceding claims.

15. Process for manufacturing a cartridge system (1) according to any of Claims 1 to 14,
-- wherein the cartridge (2) and the intermediate cap (60) are provided in a first process step,
-- wherein, in a second process step, after the first process step, the cartridge (2) and the intermediate cap (60) are connected to one another by the first connecting means (20) of the cartridge (2) and the first mating connecting means (21) of the intermediate cap (60).

## Revendications

1. Système à cartouche (1) destiné à produire une boisson (70), le système à cartouche (1) pouvant être inséré dans une machine de préparation de boissons, le système à cartouche (1) comprenant une cartouche (2), qui comprend un réservoir (6) rempli d'une substance de boisson (7), et un logement de cartouche (10), le logement de cartouche (10) comportant une chambre de mélange (8) qui peut être reliée fluidiquement au réservoir (6) et une alimentation en fluide (12) qui débouche dans la chambre de mélange (8), **caractérisé en ce que** le système à cartouche (1) comprend un capuchon intermédiaire (60), la cartouche (2) comportant un premier moyen de liaison (20), le capuchon intermédiaire (60) comportant un premier moyen de liaison homologue (21) qui est complémentaire du premier moyen de liaison (20), le premier moyen de liaison homologue (21) étant relié au premier moyen de liaison (20).

2. Système à cartouche (1) selon la revendication 1, le système à cartouche (1) comprenant un élément d'étanchéité (18), une ouverture (90) de la cartouche (2), en particulier dans un état initial du système à cartouche (1), étant fermée par l'élément d'étanchéité (18) .

3. Système à cartouche (1) selon l'une des revendications précédentes, le premier moyen de liaison (20) comprenant un filetage extérieur (20'), le premier moyen de liaison homologue (21) comprenant un filetage intérieur (21'), la cartouche (2) et le capuchon intermédiaire (60) étant reliés entre eux notamment par le filetage extérieur (20') de la cartouche (2) et le filetage intérieur (21') du capuchon intermédiaire (2).

4. Système à cartouche (1) selon l'une des revendications précédentes, la cartouche (2) comportant un premier moyen anti-rotation (25), une nervure notamment verticale (25'') et/ou une rainure notamment verticale (25'), et/ou le capuchon intermédiaire (60) comportant un autre premier moyen anti-rotation (26), une nervure notamment verticale et/ou une rainure notamment verticale, une orientation relative entre la cartouche (2) et le capuchon intermédiaire (60) étant déterminée à l'aide du premier moyen anti-rotation (25) et/ou de l'autre premier moyen anti-rotation (26).

5. Système à cartouche (1) selon l'une des revendications précédentes, le capuchon intermédiaire (60) comportant une zone de fond (61) et une paroi de capuchon intermédiaire (62), la paroi de capuchon intermédiaire (62) s'étendant en particulier perpendiculairement depuis la zone de fond (61) et s'étendant circonférentiellement autour de la zone de fond (61), le capuchon intermédiaire (60) étant de préférence en forme de cuvette.

6. Système à cartouche (1) selon la revendication 5, la zone de fond (61) du capuchon intermédiaire (60) comportant une ouverture de passage (63), destinée en particulier au passage d'un mandrin de perçage (73) à travers l'ouverture de passage (63) de la zone de fond (61) .

7. Système à cartouche (1) selon l'une des revendications 2 à 6, l'élément d'étanchéité (18) étant disposé entre un bord (2'''') d'une paroi de cartouche (2") de la cartouche (2) et la zone de fond (61) du capuchon intermédiaire (60).

8. Système à cartouche (1) selon l'une des revendications 2 à 7, l'élément d'étanchéité (18) comprenant un film d'étanchéité (18").

9. Système à cartouche (1) selon l'une des revendications précédentes, le capuchon intermédiaire (60) étant relié au logement de cartouche (10).

10. Système à cartouche (1) selon l'une des revendications précédentes, le capuchon intermédiaire (60) comportant un deuxième moyen de liaison (22), et/ou le logement de cartouche (10) comportant un deuxième moyen de liaison homologue (23), le deuxième moyen de liaison homologue (23) étant de préférence relié au deuxième moyen de liaison (22) d'une manière par une liaison par complémentarité de formes, une liaison en force et/ou une liaison de matière.

11. Système à cartouche (1) selon l'une des revendications précédentes, le logement de cartouche (10) comportant une structure de base (10') qui est au moins partiellement et en particulier entièrement réalisée en matière synthétique, la structure de base (10') présentant une configuration en forme de cuvette dont le côté ouvert est orienté en direction de la cartouche (2), une ouverture de sortie de boisson (11) et un guide de mandrin (80) ouvert vers l'extérieur étant formés sur un côté de fond (10'') opposé à la cartouche (2) et une alimentation en fluide (12) étant formée sur le côté de fond (10'') ou sur une paroi latérale (10''') de la structure de base (10').

12. Système à cartouche (1) selon la revendication 11, un mandrin de perçage (73) monté de manière coulissante étant disposé à l'intérieur du guide de mandrin (80), le mandrin de perçage (73) pouvant coulisser entre une position rétractée, dans laquelle le mandrin de perçage (73) est distant de l'élément d'étanchéité (18), et une position déployée, dans laquelle le mandrin de perçage (73) perce l'élément d'étanchéité (18) et fait saillie dans le réservoir (6), une paroi extérieure du mandrin de perçage (73) comportant notamment au moins un conduit latéral (71) destiné à guider la substance de boisson (7) en direction de la chambre de mélange (8) lorsque l'élément d'étanchéité (18) est percé.

13. Système à cartouche (1) selon la revendication 12, le mandrin de perçage (73) comportant une conduite d'air comprimé intégrée (40), la conduite d'air comprimé (40) s'étendant à l'intérieur du mandrin de perçage (73) depuis un raccord d'air comprimé extérieur (42) destiné au raccordement à une source d'air comprimé jusqu'à une sortie d'air comprimé (43) dans la zone d'une pointe du mandrin de perçage et au soufflage d'air comprimé dans le réservoir (6).

14. Machine de préparation de boissons, comprenant un système à cartouche (1) selon l'une des revendications précédentes.

15. Procédé de fabrication d'un système à cartouche (1) selon l'une des revendications 1 à 14,
- - la cartouche (2) et le capuchon intermédiaire (60) étant fournis dans une première étape de procédé,
- - dans une deuxième étape de procédé, après la première étape de procédé, la cartouche (2) et le capuchon intermédiaire (60) étant reliés l'un à l'autre par le premier moyen de liaison (20) de la cartouche (2) et le premier moyen de liaison homologue (21) du capuchon intermédiaire (60).
